# EUROPEAN PATENT SPECIFICATION

(11) **EP 4 585 117 B1**
(45) Date of publication and mention of the grant of the patent: **07.10.2026**
(21) Application number: 24191832.5
(22) Date of filing: 30.07.2024
(51) Int. Cl.: A47J 37/06, A47J 27/086, A47J 36/32

(54) **AIR FRYER AND COOKING CONTROL METHOD**
LUFTFRITTEUSE UND KOCHSTEUERUNGSVERFAHREN
FRITEUSE À AIR ET PROCÉDÉ DE COMMANDE DE CUISSON

(30) Priority: 12.01.2024 CN 202410055035; 24.01.2024 CN 202410105460
(43) Date of publication of application: 16.07.2025
(73) Proprietor: Foshan Shunde Midea Electrical Heating Appliances Manufacturing Co., Ltd., Foshan, Guangdong 528311 (CN)
(72) Inventor: DU, Zujing, Guangdong Province (CN); Fu, Yangbin, Guangdong Province, 528311 (CN); Lu, Liangjun, Guangdong Province, 528311 (CN); ZHANG, Mamei, Beijiao, Shunde, Foshan, Guangdong, 528311 (CN); Chen, Decheng, Guangdong Province, 528311 (CN); GUO, Yuanjiu, Guangdong Province (CN); Li, Jiasheng, Guangdong Province, 528311 (CN); Feng, Shixuan, Guangdong Province, 528311 (CN)
(74) Representative: RGTH

(56) References cited:
- CN-A- 110 448 187
- CN-A- 110 604 481
- CN-U- 216 256 747
- US-A1- 2014 318 387
- US-B1- 11 490 761

## Description

### CROSS-REFERENCE TO RELATED APPLICATIONS

This disclosure claims priority to Chinese Patent Application No. 202410055035.9 filed with China National Intellectual Property Administration on January 12, 2024 and entitled "AIR FRYER", and Chinese Patent Application No. 202410105460.4 filed with China National Intellectual Property Administration on January 24, 2024 and entitled "COOKING CONTROL METHOD, DEVICE, AIR FRYER AND STORAGE MEDIUM".

### FIELD

The present disclosure relates to the field of life electric apparatuses, and particularly relates to an air fryer and a cooking control method.

### BACKGROUND

In related solutions, an air fryer with steam is provided, and this type of air fryer improves the problem that ingredients cooked by the air fryer are dry by adding steam to the fryer. But different ingredients require different amounts of steam, and the tastes of foods cooked with different amounts of steam are completely different. However, existing air fryers cannot adjust the steam volume according to actual needs, and this results in poor taste of the cooked ingredients and ruins the user experience of using the air fryer. CN 110 604 481 A relates to a cooking apparatus of hot air deep fat fryer type with system for closing hot air extractor. US 11,490,761 B1 describes a cooking system. CN 216 256 747 U discloses an unscrewing type exhaust device and air fryer oven. CN 110 448 187 A describes a cookware with air fryer function. US 2014/0318387 A1 discloses a cooking apparatus.

Therefore, how to provide an air fryer that can regulate steam volume has become an urgent problem to be solved.

### SUMMARY

The present disclosure aims to solve at least one of the problems that exist in the prior art or related art.

Therefore, the purpose of the present disclosure is to provide an air fryer and a cooking control method.

In order to achieve the above purpose, according to the first aspect of the present disclosure, an embodiment of the present disclosure provides an air fryer according to claim 1, comprising: a housing; a partition board, mounted in the housing and separating space in the housing into a first chamber body and a second chamber body which are arranged independently, and a steam inlet is provided in the partition board; a cooking chamber body, located inside the second chamber body and communicating with the steam inlet; a hot air device for conveying hot air to the cooking chamber body; a steam valve, comprising a steam channel and an adjustment member that can move, and the steam channel communicates with the steam inlet, the steam channel comprises a first opening, and the adjustment member can adjust a size of a cross section of the steam channel or an opening size of the first opening. Wherein the partition board comprises a reflecting cover, which is located at a side of the hot air device away from the cooking chamber body, with the steam inlet provided on the reflecting cover. Wherein, the steam valve is arranged at an opening provided on a top portion of the reflecting cover; and the steam channel is provided independently and communicates with the cooking chamber body through the steam inlet; and a sealing member is provided between the reflecting cover of the partition board and the steam valve, wherein the sealing member enables a sealing connection between the reflecting cover partition board and the steam valve.

According to the second aspect of the present disclosure, an embodiment of the present disclosure provides a cooking control method according to claim 13 the method is uses an air fryer as described above which is provided with a cooking chamber and a water vapor channel, and the water vapor channel communicates with the cooking chamber and an outside; the air fryer comprises a water vapor adjustment device, the water vapor adjustment device is provided in the water vapor channel, and adjusts a blocking degree for the water vapor channel. The method comprises: in response to a cooking instruction, determining a cooking mode; and in different cooking modes, the blocking degrees for the water vapor channel are different, and a finished product of a same target dish has different water contents after cooking in different cooking modes. Based on the cooking modes, working parameters of the air fryer are determined, and the air fryer is controlled to work based on the working parameters.

According to the air fryer provided by the present disclosure, during cooking, a amount of steam that needs to be added can be determined based on the types of ingredients to be cooked, and then, the size of the cross section of the steam channel or the opening size of the first opening can be comprehensively determined based on the amount of steam that needs to be added, the amount of steam that can be generated, etc., and thus this achieves the control of the amount of steam that can be discharged by the steam valve. For example, when a certain ingredient is cooked, if it is found that the cooked ingredient is relatively dry, the steam valve can be closed and then steam is not discharged, and the ingredient can be replenished with water through steam; on the contrary, if it is found that the cooked ingredients are relatively moist and not crispy, when the ingredients are cooked next time, the steam valve can be fully or partially opened to increase the amount of steam discharged during the cooking process. In addition, a first driving member can be disposed for the adjustment member, and then, the open state of the steam valve can be adjusted automatically according to the ingredients to be cooked, and thus the automatic adjustment of the amount of steam is achieved. Meanwhile, in the present disclosure, the steam channel of the steam valve directly communicates with the steam inlet, and the steam valve has an independent channel for communicating with cooking area, to discharge the steam inside the cooking chamber body, and thus this achieves that the steam channel is completely separated from a heat dissipation channel, and solves the problem that the steam enters the heat dissipation channel (i.e., a cold air duct), and causes the heat dissipation channel to become hot and the heat dissipation function to decrease, and thus results in a safety hazard of the over-temperature of electrical components.

Furthermore, when the first opening is completely closed, a micro pressure (usually less than 40kPa) can be formed inside the cooking chamber body, this allows for micro pressure cooking of ingredients, while the micro pressure cooking can increase the pressure inside the cooking chamber body and make the food cooked quickly. This method can shorten cooking time and meanwhile preserve the nutritional contents of the food. In addition, the micro pressure cooking can reduce the evaporation of water in the food, to preserve the original flavor of the food. Meanwhile, due to the short cooking time of the micro pressure cooking, the nutrients in the food are not easily lost, which can better preserve the nutritional value of the food.

The cooking control method provided in the present disclosure is applied to the air fryer which is provided with the cooking chamber and the water vapor channel, and the water vapor channel communicates with the cooking chamber and the outside. Therefore, during the working process of the air fryer, the water vapor (for example, the steam generated by the food under high temperature) inside the cooking chamber can be discharged to the outside through the water vapor channel. The air fryer further comprises the water vapor adjustment device provided in the water vapor channel, and the water vapor channel is used to adjust the blocking degree for the water vapor channel. Therefore, the smaller the blocking degree of the water vapor adjustment device for the water vapor channel is, the larger the discharging amount of the water vapor in the cooking chamber is.

The air fryer in the present disclosure can determine the cooking mode in response to the cooking instruction. Furthermore, the working parameters of the air fryer are determined based on the cooking mode, and finally, the air fryer is controlled to work based on the working parameters. Exemplarily, in different cooking modes, the blocking degrees for the water vapor channel are different. That is, the discharging amounts of the water vapor corresponding to different cooking modes are different. Therefore, for the same target dish, in different cooking modes, the water content of the finished product after cooking is different.

For example, in the case of a large amount of water vapor discharge, the water vapor content in the cooking chamber is relatively low, the food continuously loses moisture at high temperature and becomes dry, and the water content in the finished product is low, and the taste of the finished product tends to be crispy and fragrant. On the contrary, when the amount of water vapor discharge is relatively small, the water vapor content in the cooking chamber is higher, more water vapor helps preserve the water in the food, and the water content in the finished product is relatively large, and the taste of the finished product is softer and more juicy. Therefore, the air fryer in this embodiment can achieve different cooking tastes for the same target dish by adjusting the blocking degree for the water vapor channel by the water vapor adjustment device, and make the taste of the finished product more diverse.

The additional aspects and advantages of the present disclosure will be obvious in the following description, or can be understood through the implementation of the present disclosure.

### BRIEF DESCRIPTION OF THE DRAWINGS

The above and/or additional aspects and advantages of the present disclosure will be obvious and understood easily from the following description of the embodiments in combination with the accompanying drawings.
FIG. 1 is a first schematic view of the structure of an air fryer according to an embodiment of the present disclosure;
FIG. 2 is a schematic view of the structure of a steam valve of an air fryer according to an embodiment of the present disclosure;
FIG. 3 is a device diagram of part of the structure of an air fryer according to an embodiment of the present disclosure;
FIG. 4 is a second schematic view of the structure of an air fryer according to an embodiment of the present disclosure;
FIG. 5 is a schematic view of a cross section of the air fryer shown in FIG. 4;
FIG. 6 is a schematic view of a cross section of a pot cover of the air fryer as shown in FIG. 5;
FIG. 7 is a schematic view of the structure of a steam valve of the air fryer as shown in FIG. 5;
FIG. 8 is a first schematic flow chart of a cooking control method according to an embodiment of the present disclosure;
FIG. 9 is a second schematic flow chart of a cooking control method according to an embodiment of the present disclosure;
FIG. 10 is a third schematic flow chart of a cooking control method according to an embodiment of the present disclosure;
FIG. 11 is a fourth schematic flow chart of a cooking control method according to an embodiment of the present disclosure;
FIG. 12 is a block diagram of the devices of a cooking control device according to an embodiment of the present disclosure;
FIG. 13 is a block diagram of the devices of an airy fryer according to an embodiment of the present disclosure; and
FIG. 14 is a block diagram of the devices of a computer readable storage medium which is not part of the present invention.

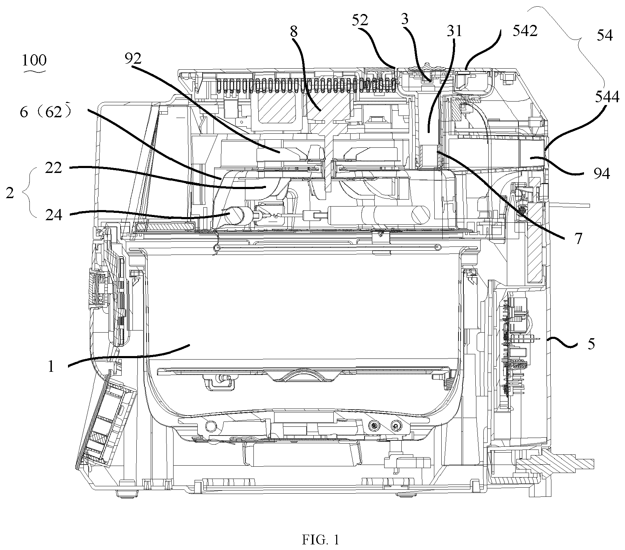

The corresponding relationships between the reference signs and the component names in FIG. 1 to FIG. 7 and FIG. 12 to FIG. 14 are as follows:
100: air fryer, 1: cooking chamber body, 12: cooking chamber, 2: hot air device, 22: hot air fan, 24: heating device, 3: steam valve, 31: steam channel, 312: air inlet channel, 32: adjustment member, 322: blocking member, 324: trigger part, 326: adjustment plate, 34: valve seat, 342: extension part, 344: through hole, 36: valve cover, 362: exhaust port, 364: operating window, 38: operating switch, 382: push button, 42: detection member, 44: switch assembly, 5: housing, 52: mounting hole, 54: upper cover body, 542: top cover, 544: side wall, 6: partition board, 62: reflecting cover, 7: sealing member, 8: second driving member, 92: heat dissipation fan, 94: air outlet, 10: pot body, 11: control device, 30: pot cover, 320: mounting shell, 3210: first mounting chamber, 3230: water vapor channel, 3232: first sub channel, 3234: second sub channel, 50: control panel, 520: control member, 900: cooking control device, 910: first determining device, 920: second determining device, 930: control device, 1000: air fryer, 1005: water vapor adjustment device, 1010: processor, 1020: storage, 1100: computer readable storage medium, 1110: computer program instruction.

### DETAILED DESCRIPTION OF THE DISCLOSURE

To more clearly understand the above purposes, features and advantages of the present disclosure, the present disclosure will be further detailed hereinafter in combination with the accompanying drawings and embodiments. It should be indicated that in the case of no conflict, the embodiments and the features in the embodiments of the present disclosure can be combined with each other.

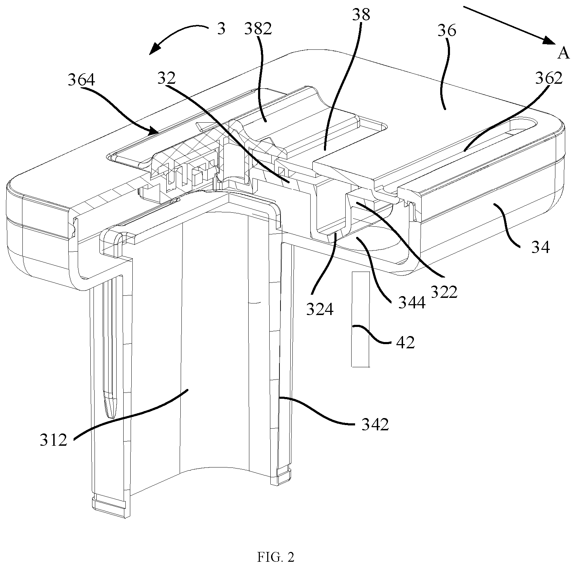

As shown in FIG. 1 and FIG. 2, an embodiment of the present disclosure provides an air fryer 100, comprising a cooking chamber body 1, a hot air device 2 and a steam valve 3. The hot air device 2 is used to deliver hot air to the cooking chamber body 1. The steam valve 3 comprises a steam channel 31 and an adjustment member 32 that can move, the steam channel 31 communicates with the cooking chamber body 1, the steam channel 31 comprises a first opening, and the adjustment member 32 can adjust the size of the cross section of the steam channel 31 or the opening size of the first opening.

The air fryer 100 provided by the present disclosure comprises the cooking chamber body 1, the hot air device 2 and the steam valve 3. The ingredients to be cooked can be placed in the cooking chamber body 1 for heating and baking. The hot air device 2 is used to generate hot air and circulate it into the cooking chamber body 1. The steam valve 3 can be used to discharge the steam in the cooking chamber body 1. During cooking, the amount of steam that needs to be added can be determined based on the type of ingredients that are cooked, and then, the size of the cross section of the steam channel 31 or the opening size of the first opening can be comprehensively determined based on the amount of steam that needs to be added, the amount of steam that can be generated, etc., and the control over the amount of steam that can be discharged by steam valve 3 is achieved. For example, when a certain ingredient is cooked, if it is found that the cooked ingredient is relatively dry, the steam valve 3 can be closed and then steam is not discharged, and the ingredient can be replenished with water through steam; on the contrary, if it is found that the cooked ingredient is relatively moist and not crispy, when the ingredient is cooked next time, the steam valve 3 can be fully or partially opened to increase the amount of steam discharged during the cooking process. In addition, a first driving member can be disposed for the adjustment member 32, and then, the open state of the steam valve 3 can be adjusted automatically according to the ingredients to be cooked, and thus the automatic adjustment of the amount of steam is achieved.

In some embodiments, as shown in FIG. 1, the end of the steam channel 31 away from the cooking chamber body 1 is connected to the outside. That is, the steam valve 3 can directly discharge the steam to the outside of a device from the cooking chamber body 1, and thus the adjustment of the temperature and humidity in the cooking chamber body 1 can be achieved.

In some embodiments, as shown in FIG. 1, the air fryer 100 further comprises a housing 5 and a partition board 6. The partition board 6 is mounted in the housing 5, and separates the space in the housing 5 into a first chamber body and a second chamber body. The cooking chamber body 1 and the hot air device 2 are located in the second chamber body. A steam inlet is provided in the partition board 6. The steam valve 3 is attached to the partition board 6, and the steam channel 31 of the steam valve 3 communicates with the steam inlet in the partition board 6.

In the embodiment, the internal space of the housing 5 is divided into two parts by the partition board 6, i.e., the first chamber body and the second chamber body. The cooking chamber body 1, the hot air device 2, etc. are mounted in the second chamber body, and this portion of space is mainly used for heating the ingredients. The first chamber body is mainly used for placing electric control members, for example, a driving device, an electric control board, etc. of a hot air fan. The steam inlet is provided in the partition board 6, i.e., the steam in the cooking chamber body 1 can enter the steam valve 3 through the partition board 6. By this arrangement, since the steam channel 31 of the steam valve 3 directly communicates with the steam inlet, the steam valve 3 has an independent channel communicating with the cooking area, to discharge the steam in the cooking chamber body 1, and thus this achieves that the steam channel 31 is completely separated from a heat dissipation channel, and solves the problem that the steam enters the heat dissipation channel (i.e. a cold air duct), and causes the heat dissipation channel to become hot and the heat dissipation function to decrease, and thus results in a safety hazard of over-temperature of electrical components.

Furthermore, when the first opening is completely closed, a micro pressure (usually less than 40kPa) can be formed inside the cooking chamber body 1, this allows for micro pressure cooking of ingredients, while the micro pressure cooking can increase the pressure inside the cooking chamber body 1 and make the food cooked quickly. This method can shorten cooking time and meanwhile preserve the nutritional contents of the food. In addition, the micro pressure cooking can reduce the evaporation of water in the food, to preserve the original flavor of the food. Meanwhile, due to the short cooking time of the micro pressure cooking, the nutrients in the food are not easily lost, which can better preserve the nutritional value of the food.

Furthermore, a sealing member 7 is provided between the partition board 6 and the steam valve 3, and the sealing member 7 enables a sealing connection between the partition board 6 and the steam valve 3, and ensures that the steam will not leak into the first chamber body.

Furthermore, the partition board 6 and the housing 5 are in sealing connection, i.e., the first chamber body and the second chamber body are disconnected and do not communicate with each other, i.e., the steam in the cooking chamber body 1 cannot enter the first chamber body, and this prevents the steam from entering the heat dissipation duct and prevents the heat dissipation duct from becoming hot. Thus, the heat dissipation efficiency of the product can be ensured, and the safety hazard caused by the over-temperature of electrical components is avoided.

In some embodiments, as shown in FIG. 2, one end of the adjustment member 32 is provided with a blocking member 322; when the blocking member 322 moves along a first direction (direction A as shown in FIG. 2), the opening area of the first opening decreases gradually, when the blocking member 322 moves along a second direction, the opening area of the first opening increases gradually; and the first direction is opposite to the second direction.

In the embodiment, the adjustment member 32 comprises the blocking member 322, i.e., a structure for blocking the steam channel 31. Meanwhile, the blocking member 322 can do back-and-forth movements along the first direction and the second direction, to adjust the opening area of the first opening. By this arrangement, through the back-and-forth movement of the adjustment member 32, the increasing or decreasing adjustment of the opening size of the first opening can be achieved.

In some embodiments, an operating switch 38 is provided at the end of the adjustment member 32 away from the first opening along the first direction, and the operating switch 38 can bring the blocking member 322 to move along the first direction or the second direction.

In the embodiment, by the operating switch 38, the blocking member 322 can be pushed to move, to achieve the adjustment of the opening size of the first opening. The setting of the operating switch 38 allows a user to manually drive the blocking member 322, and a manual control of steam volume is achieved.

In some embodiments, as shown in FIG. 2, the steam valve 3 further comprises a detection member 42, a trigger part 324 is provided on the adjustment member 32, and the trigger part 324 is used to trigger the detection member 42 in the moving process to prompt the position of the blocking member 322.

In some embodiments, the air fryer 100 further comprises a control device 11 connected to the detection member 42, and the control device 11 can control the humidity of the cooking chamber of the air fryer 100 and/or the movement of the adjustment member 32 based on the detection result of the detection member 42.

In the embodiment, the detection member 42 is used to detect the position of the adjustment member 32, and can determine the opening size of the first opening according to the position. For example, at least one travel switch is provided on the motion trajectory of the adjustment member 32, and then the corresponding travel switch can be triggered through the trigger part 324, and thus the position of the adjustment member 32 can be determined based on whether the travel switch is triggered. After the position of the blocking member 322 is determined, the working of the entire product can be controlled through the control device 11, for example, controlling the heating power of a product, controlling the generating amount of the steam, etc. The control device 11 can further control the amount of the steam according to the position of the adjustment member 32, for example, controlling the generating amount of the steam, or controlling the heating power of the ingredients, etc., and thus the humidity in the cooking chamber body 1 is controlled. Apparently, in the case that the adjustment member 32 can conduct automatic adjustment, whether the adjustment member 32 moves into position is determined based on the position of the adjustment member 32, and thus the movement of adjustment member 32 is controlled.

In addition, the control device 11 can further adjust the cooking program based on whether the detection member 42 is triggered or the triggering degree, and then the taste of food is improved.

In some embodiments, as shown in FIG. 2, the trigger part 324 is a first protrusion formed by the blocking member 322 along a direction perpendicular to the first direction and having a direction away from the first opening, and the top end of the first protrusion has a curved surface or an inclined surface for triggering the detection member 42.

In the embodiment, a protrusion can be disposed on the blocking member 322 to achieve the triggering to the detection member 42, and this helps the stable cooperation between the protrusion and the detection member 42; the top surface of the protrusion can be disposed to be a curved surface or an inclined surface, to ensure that the protrusion can trigger the detection member 42 normally without interfering with the detection member 42 and getting stuck.

In some embodiments, as shown in FIG. 2, a through hole 344 is provided at the position of a valve seat 34 corresponding to the detection member 42, and the through hole 344 is used by the detection member 42 to trigger the trigger part 324. The arrangement of the through hole 344 renders that the blocking member 322 can normally contact the detection member 42 and thus is triggered, and thus this can simply and conveniently achieve the detection of the position of the blocking member 322.

In some embodiments, as shown in FIG. 2, the steam valve 3 further comprises a valve seat 34 and a valve cover 36. The valve cover 36 is mounted on the valve seat 34, and the valve cover 36 is provided with an exhaust port 362. The steam channel 31 is enclosed by the valve cover 36 and the valve seat 34 and communicates with the exhaust port 362.

In the embodiment, the valve seat 34 and the valve cover 36 constitute a housing structure of one steam valve 3, and a steam channel can be defined through the valve seat 34 and the valve cover 36, to achieve the discharging of the steam. Meanwhile, the exhaust port 362 is provided in the valve cover 36, and the steam in the steam channel 31 can be discharged to the outside through the exhaust port 362.

In some embodiments, as shown in FIG. 2, the adjustment member 32 is movably arranged between the valve seat 34 and the valve cover 36. That is, the adjustment member 32 is mounted inside the valve seat 34 and the valve cover 36, and thus the opening size of the first opening can be adjusted from the inside of the valve seat 34 and the valve cover 36. Apparently, in other embodiments, the adjustment member 32 can further be arranged outside the valve cover 36, for example, when the adjustment member 32 is used to adjust the opening size of the exhaust port 362, the adjustment member 32 can be provided outside the valve cover 36.

The adjustment member 32 can close or open the first opening. In addition, the adjustment member 32 can further comprise multiple positions, and thus, in addition to being able to open and close the first opening, the adjustment member 32 can further divide the opening size of the first opening into different gears, to achieve more precise adjustment of steam volume.

In some embodiments, as shown in FIG. 2, the first opening comprises the exhaust port 362, i.e., the adjustment member 32 is arranged corresponding to the exhaust port 362, and used to adjust the opening size of the exhaust port 362.

Since the exhaust port 362 is generally arranged in the outer surface of a device, the arrangement that the adjustment member 32 corresponds to the exhaust port 362 enables the adjustment member 32 to be closer to the outer surface of the device, and this firstly helps a user manually adjust the position of the adjustment member 32 and thus adjust the opening size of the exhaust port 362. Secondly, when this product is not used, this arrangement can further completely close the exhaust port 362 by the adjustment member 32 to prevent external dust and other debris from entering the interior of steam valve 3.

In some embodiments, as shown in FIG. 2, the adjustment member 32 is movably provided between the valve seat 34 and the valve cover 36, an operating window 364 is provided in the valve cover 36, and the operating window 364 is an avoidance position formed by the depression of the valve cover 36 towards the direction of the valve seat 34; the operating switch 38 is movably mounted on the valve cover 36 and/or the valve seat 34, and located inside the avoidance position, the length of the avoidance position in the first direction is greater than or equal to the sum of the length of the operating switch 38 in the first direction and the travel length of the operating switch 38 in the first direction.

In the embodiment, the operating switch 38 is movably mounted on the valve cover 36, and the operating switch 38 can be exposed to the outside, and this is convenient for a user to manually operate the operating switch 38, and thus the manual adjustment of the steam volume is achieved. The operating window 364 is an avoidance position formed by the depression of the valve cover 36 towards the direction of the valve seat 34, and thus this can prevent the operating switch 38 from protruding too much from the valve cover 36, to improve the overall aesthetics of the product. The length of the avoidance position in the first direction is greater than or equal to the sum of the length of the operating switch 38 in the first direction and the travel length of the operating switch 38 in the first direction, and this ensures the normal movement of the operating switch 38 inside the avoidance position, and thus the adjustment of the size of the opening area of the steam channel 31 is achieved. Meanwhile, the avoidance position can further control and guide the operating switch 38, and thus the maximum displacement of the operating switch can be controlled and the sliding of the operation switch 38 can be guided through the avoidance position, and the displacement of the operating switch 38 during movement is avoided.

In some embodiments, as shown in FIG. 2, a push button 382 is provided on the upper surface of the operating switch 38. The push button 382 can be used to achieve the pushing of the operating switch 38, and this can simply and conveniently achieve the adjustment of the opening area of the steam valve 3.

In some embodiments, as shown in FIG. 2, the push button 382 is a second protrusion formed on the upper surface of the operating switch 38 in a direction perpendicular to the first direction and away from the direction of the cooking chamber body. The existence of the second protrusion provides a focal point for the user to push the operating switch 38, and this makes the operation of the operating switch 38 more convenient.

In some embodiments, there is a transitional arc between the second protrusion and the operating switch 38. The transitional arc can make the transition between the operating switch 38 and the second protrusion smoother, and thus the overall appearance of the switch is improved.

In some embodiments, there are guide members mutually cooperating between the operating switch 38 and the valve cover 36; the guide member comprises a guide groove and a guide protrusion that adapt with each other; one of the guide groove and the guide protrusion is provided on the valve cover 36, and the other one of the guide groove and the guide protrusion is provided on the operating switch 38. By setting the guide member, the operating switch 38 can move more smoothly and stably on the valve cover 36, and this can avoid the risk of deviation of the operating switch 38 during moving and thus avoids the risk of jamming of the operating switch 38, and thus the operating switch 38 can be more durable.

In some embodiments, the valve seat 34 and the valve cover 36 are detachably connected by a buckle. The valve cover 36 can be removed separately from the valve seat 34 for cleaning.

In some embodiments, the air fryer 100 further comprises a first driving member (not shown in the figures), which is connected to the adjustment member 32, and is used for driving the adjustment member 32 to move.

In the embodiment, the adjustment member 32 can be driven to move through the first driving member, and thus the automatic adjustment of the opening size of the steam valve 3 can be achieved, while it does not need the user's manual adjustment, and this can more accurately control the steam volume.

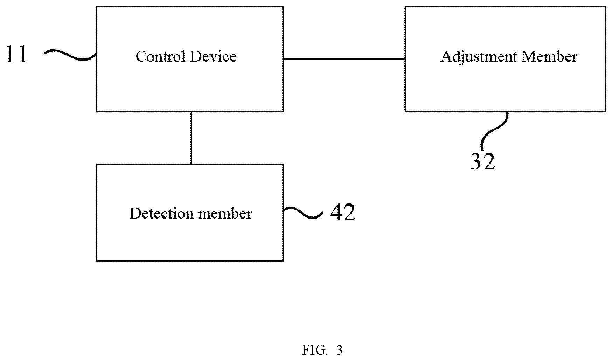

In some embodiments, as shown in FIG. 2 and FIG. 3, the steam valve 3 further comprises a detection member 42, which is disposed corresponding to the adjustment member 32 and can detect the position of the adjustment member 32. The air fryer 100 further comprises the control device 11, which is connected to the detection member 42, and can control the steam volume of the air fryer 100 based on the detection result of the detection member 42.

In the embodiment, the detection member 42 is used to detect the position of the adjustment member 32, and can determine the opening size of the first opening according to the position. For example, at least one travel switch can be provided on the motion trajectory of the adjustment member 32, and then the position of the adjustment member 32 can be determined through the travel switch. The working of the entire product is controlled through the control device 11, for example, controlling the heating power of a product, controlling the generating amount of the steam, etc. The control device 11 can further control the amount of the steam according to the position of the adjustment member 32, for example, controlling the generating amount of the steam, or controlling the heating power of the ingredients, etc. Apparently, in the case that the adjustment member 32 can conduct automatic adjustment, whether the adjustment member 32 moves into position can be determined based on the position of the adjustment member 32, and thus the movement of the adjustment member 32 is controlled.

In some embodiments, the air fryer 100 further comprises a heat dissipation duct, and the heat dissipation duct and the steam channel 31 are arranged independently.

In the embodiment, the hot air device 2 comprises a hot air fan 22 and a heating device 24. The heating device 24 is used for heating air, and the hot air fan 22 is used to circulate the air in the cooking chamber body 1, and then hot air is generated cyclically. The heat dissipation duct comprises an air inlet and an air outlet 94; a heat dissipation fan 92 is used to allow the air outside the air inlet to enter the heat dissipation duct, and then pass through the components that need heat dissipation, and then the air is discharged out via the air outlet 94. Specifically, a second driving member 8, an electric control board, etc. of the hot air fan 22 can be mounted in the heat dissipation duct to conduct heat dissipation through the heat dissipation duct. The heat dissipation duct and the steam channel 31 are independently arranged to prevent the steam from entering the heat dissipation duct, to prevent the steam in the cooking chamber body 1 from entering the heat dissipation duct and affecting the heat dissipation effect of the product. This can solve the problem in related solutions that the steam easily enters the heat dissipation duct, and then leads to a low heat dissipation effect and easily damage the parts inside the heat dissipation duct.

In some embodiments, as shown in FIG. 1, the air fryer 100 further comprises: a housing 5; a partition board 6, mounted in the housing 5, and separating the space in the housing 5 into a first chamber body and a second chamber body. The cooking chamber body 1, the hot air device 2 are located in the second chamber body. A steam inlet is provided in the partition board 6. The steam valve 3 comprises an extension part 342, the extension part 342 is attached to the partition board 6, the steam channel 31 comprises an air inlet channel 312 located inside the extension part 342, and the air inlet channel 312 communicates with the steam inlet; a sealing member 7, provided between the partition board 6 and the extension part 342 and used for enabling the sealing connection between the partition part 6 and the extension part 342.

In the embodiment, the internal space of the housing 5 is divided into two parts by the partition board 6, i.e., the first chamber body and the second chamber body. The cooking chamber body 1, the hot air device 2, etc. are mounted in the second chamber body, and this portion of space is mainly used to heat the ingredients. The first chamber body is mainly used for placing the electric control members, for example, a driving device, an electric control board, etc. of a hot air fan. The steam inlet is provided in the partition board 6, i.e., the steam in the cooking chamber body 1 can enter the steam valve 3 through the partition board 6. Specifically, the steam valve 3 comprises the extension part 342 with the air inlet channel 312, the steam valve 3 is attached to the partition board 6 through the extension part 342, and communicates with the cooking chamber body 1 through the extension part 342. In addition, the sealing member 7 is provided between the partition board 6 and the extension part 342, the sealing member 7 can enable the sealing connection between the partition part 6 and the extension part 342, and thus it is ensured that the steam will not leak into the first chamber body.

Furthermore, the partition board 6 and the housing 5 are in sealing connection, i.e., the first chamber body and the second chamber body are disconnected and do not communicate with each other, that is, the steam in the cooking chamber body 1 cannot enter the first chamber body, and thus this prevents the steam from entering the heat dissipation duct and causing the heat dissipation duct to become hot. Thus, the heat dissipation efficiency of the product can be ensured, and the safety hazard caused by the over-temperature of electrical components is avoided.

According to the embodiment, as shown in FIG. 1, the partition board 6 comprises a reflecting cover 62, which is located at a side of the hot air device 2 away from the cooking chamber body 1, with the steam inlet provided on the reflecting cover 62.

In some embodiments, the reflecting cover 62 is provided above the hot air device 2, and used for guiding the hot air generated by the hot air device 2 to the direction of the cooking chamber body 1. The steam inlet is arranged in the reflecting cover 62.

In some embodiments, the heat dissipation duct comprises an air inlet, the housing 5 comprises an upper cover body 54, the upper cover body 54 comprises a top cover 542 and a side wall 544, and the air inlet is provided in the side wall 544 of the upper cover body 54.

The upper cover body 54 comprises the top cover 542 and the side wall 544, and one end of the heat dissipation duct is provided with the air inlet, one end of the heat dissipation duct can extend to the side wall 544 of the upper cover body 54, to facilitate the inflow of air; at the same time, the exhaust port 362 of the steam valve 3 can be provided in the top portion of the upper cover body 54, and the exhaust port 362 can be relatively away from the air inlet, and this prevents the exhausted steam from being absorbed into the heat dissipation duct.

In some embodiments, the side wall 544 of the upper cover body 54 is formed as an inclined wall which is inclined towards the axial direction of the air fryer 100 from top to bottom, and the air inlet is set in the inclined wall.

In the present solution, the side wall 544 is inclined, and the direction of inclination is inward; the upper cover body 54 has a shape which has a wide top and a narrow bottom; by setting the air inlet in the inclined wall, firstly, it can play a certain guiding role to facilitate the inflow of air, and secondly, the wider structure on the upper side can block a part of naturally falling dust, and then avoid the dust from entering from the air inlet and affecting the heat dissipation fan, etc.

In some embodiments, the heat dissipation duct comprises an air outlet 94; the air outlet 94 is located in the side wall 544 of the upper cover body 54, and faces the direction away from the air inlet.

The other end of the heat dissipation duct is provided with the air outlet 94, the air outlet 94 is further provided in the side wall 544 of the upper cover body 54 and is provided away from the air inlet, i.e., the air outlet 94 faces the direction away from the air inlet, and thus, the length of the heat dissipation duct is extended as much as possible, and the heat dissipation effect is improved; meanwhile, this arrangement can further keep the air inlet and air outlet 94 away from each other as much as possible, to avoid interference between the airflow of the air inlet and air outlet 94, and prevent the heat discharged out of the air outlet 94 from being absorbed into the device via the air inlet.

In some embodiments, the hot air device 2 comprises a hot air fan 22 and a heating device 24, and the air fryer 100 further comprises: a second driving member 8,which is located in the heat dissipation duct and connected to the hot air fan 22, to drive the hot air fan 22 to rotate; a heat dissipation fan 92, located in the heat dissipation duct; the heat dissipation path of the heat dissipation duct is formed to be that cold air enters via the air inlet, flows through the second driving member 8, and is then driven by the heat dissipation fan 92 and discharged via the air outlet 94.

In the embodiment, the hot air device 2 comprises the hot air fan 22 and the heating device 24. The heating device 24 is used for heating air, and the hot air fan 22 is used to circulate the air in the cooking chamber body 1, and then hot air is generated cyclically. The heat dissipation duct comprises an air inlet and an air outlet 94; the heat dissipation fan 92 is used to allow air outside the air inlet to enter the heat dissipation duct, and then the air passes through the components that need heat dissipation and is discharged via the air outlet 94. Specifically, the second driving member 8, an electric control board, etc. of the hot air fan 22 can be mounted in the heat dissipation duct to conduct heat dissipation through the heat dissipation duct. In addition, the heat dissipation duct is located in the first chamber body, i.e., the heat dissipation duct and the cooking chamber body 1 are respectively provided in the first chamber body and the second chamber body which are independent from each other, and this can prevent the steam in the cooking chamber body 1 from entering the heat dissipation duct and affecting the heat dissipation effect of the product.

In some embodiments, one end of the steam channel 31 communicating with the outside is located on the top wall of the air fryer 100. This can allow the discharged steam to move upwards from the top wall, and then it is not easily sucked into the heat dissipation duct from the air inlet. In addition, the end of steam channel 31 communicating with the outside is generally provided with an exhaust port 362, the exhaust port 362 is provided in the top portion to prevent discharging the steam from the side and easily scalding the user. In addition, when the steam volume is adjusted by adjusting the size of the exhaust port 362, setting the exhaust port 362 in the top portion can further facilitate the user to see the opening of the exhaust port 362.

In some embodiments, the first opening comprises the steam inlet. That is, the adjustment member 32 can further be arranged corresponding to the steam inlet; then the opening size of the steam inlet can be adjusted, and this can achieve the purpose of adjusting the volume of the discharged steam of the steam valve 3.

Exemplarily, the first opening only comprises the steam inlet or only comprises the air outlet 362.

Exemplarily, the first opening comprises the steam inlet and the air outlet 362 at the same time.

In some embodiments, the steam valve 3 can be detachably connected to the housing 5. That is, steam valve 3 can be disassembled as a component from the housing 5 as a whole. Furthermore, the steam valve 3 is connected to housing 5 in a quick disassembling manner, which means that the steam valve 3 can be disassembled as a whole without the need of tools, and this is convenient for cleaning and replacing the steam valve 3. Exemplarily, the steam valve 3 can be connected to the housing 5 through a buckle.

In another embodiment, the valve seat 34 of the steam valve 3 and the housing 5 are an integrated structure, or the valve seat 34 of the steam valve 3 and the housing 5 are integrally molded, that is, the valve seat 34 is a part of the housing 5, in other words, the valve seat 34 is a part of the device body itself. At the moment, the valve cover 36 can be disassembled relative to the valve seat 34 for separate cleaning.

In some embodiments, as shown in FIG. 1, the hot air device 2 comprises the hot air fan 22 and the heating device 24, and the air fryer 100 further comprises: a heat dissipation duct, located inside the first chamber body; a second driving member 8, located inside the heat dissipation duct and connected to the hot air fan 22, to drive the hot air fan 22 to rotate; and the heat dissipation fan 92 located in the heat dissipation duct. The heat dissipation fan 92 is used to make the air inside the heat dissipation duct flow from the inlet to the outlet.

In the embodiment, the hot air device 2 comprises the hot air fan 22 and the heating device 24. The heating device 24 is used for heating air, and the hot air fan 22 is used to circulate the air in the cooking chamber body 1, and then hot air is generated cyclically. The heat dissipation duct comprises an air inlet and an air outlet; the heat dissipation fan 92 is used to allow air outside the air inlet to enter the heat dissipation duct, and then the air passes through the components that need heat dissipation and is discharged via the air outlet. Specifically, the second driving member 8, an electric control board, etc. of the hot air fan 22 can be mounted in the heat dissipation duct to conduct heat dissipation through the heat dissipation duct. In addition, the heat dissipation duct is located in the first chamber body, i.e., the heat dissipation duct and the cooking chamber body 1 are respectively provided in the first chamber body and the second chamber body which are independent from each other, and this can prevent the steam in the cooking chamber body 1 from entering the heat dissipation duct and affecting the heat dissipation effect of the product.

In some embodiments, the housing 5 is provided with a mounting hole 52 which communicates with the first chamber body, and a first end of the steam valve 3 is located at the mounting hole 52. By this arrangement, one end of the steam valve 3 can be exposed to the outside through the mounting hole 52, and the steam valve 3 can be disassembled as a whole from the mounting hole 52, and secondly, it is further convenient to dispose the exhaust port 362 of the steam valve 3 at the outside, to directly discharge the steam conveniently.

In some embodiments, the exhaust port 362 of the steam channel 31 is located at the end face of the first end of the steam valve 3. Apparently, it can further be located at the side face of the first end of the steam valve 3.

In some embodiments, the mounting hole 52 is located in the top portion of the air fryer 100 or in the side wall of the air fryer 100, i.e., the steam valve 3 can be set up and down or horizontally.

In some embodiments, the air fryer 100 comprises a steam air fryer.

In some embodiments, the upper end of the cooking chamber body 1 is opened, and the hot air device 2 is located above the cooking chamber body 1. The partition board 6 is horizontally arranged (i.e. it is parallel to or quasi parallel to the cross-section of cooking chamber body 1), and the first chamber body and the second chamber body are arranged in an up and down direction.

The following is a further introduction to the air fryer 100 of the present disclosure in combination with FIG. 1 and FIG. 2.

Adding steam to a traditional air fryer 100 can make food softer and more delicious. When the food is cooked at a high temperature, it loses water and becomes dry. However, adding steam can help retain the water of the food, and make it softer and more juicy. In addition, the steam can further cook the food more evenly, as it can fill the air bubbles on the surface of the food. However, different ingredients have different demands for the steam, and the tastes of the food cooked with different amounts of steam are completely different; to achieve adjustable taste, this embodiment provides an air fryer 100 comprising a steam adjustable exhaust valve to achieve this function.

The embodiment provides an air fryer 100 with steam, which structure comprises a motor (equivalent to the second driving member 8), a top cover, an upper cover, a window, a cold air blade (equivalent to the heat dissipation fan 92), the reflecting cover 62, a heat pipe (equivalent to the heating device 24), a fryer bucket (equivalent to the cooking chamber body 1), a baking tray, an outer pot, a hot tray, a base, the steam valve 3, a sealing ring (equivalent to the sealing member 7), an exhaust window (equivalent to the exhaust channel 94), and a hot air blade (equivalent to the hot air fan 22). The steam valve 3 consists of an upper cover (equivalent to the valve cover 36) of the steam valve, a steam valve push button (it belongs to a type of the operating switch 38), the valve seat 34, and an adjustment plate (it belongs to a type of the adjustment member 32).

The steam valve push button drives the adjustment plate to act, to adjust the size of the steam outlet in the upper cover of the steam valve, and thus the control of the steam volume is achieved.

Furthermore, the steam valve 3 is disposed with a steam inlet in the valve seat 34, and a steam outlet is provided in the upper cover of the steam valve. The adjustment plate is placed between the upper cover of the steam valve and the valve seat 34, and the steam valve push button can drive the adjustment plate to adjust the size of steam channel 31, to control the steam volume. For example, the size of the steam outlet can be adjusted, or the size of the steam inlet can be adjusted, and apparently, both the size of the inlet and the size of the outlet can further be adjusted simultaneously. The upper cover of the steam valve can be directly separated from the valve seat 34; the edge of the upper cover of the steam valve is disposed with a groove, and the valve seat 34 is disposed with a protrusion structure; the groove cooperates with the protrusion structure, and then the upper cover of the steam valve and the valve seat 34 can be connected and fixed.

Furthermore, the steam valve push button can be driven by pressing up and down, driven by rotating, front and rear driven, or left and right driven.

Furthermore, the adjustment plate can move up and down to adjust the size of the channel of the inlet and the outlet, and can further adjust the size of the channel of the inlet and the outlet through rotating, or even translate on a certain plane in a space to adjust the size of the channel of the inlet and the outlet.

Furthermore, the upper cover can be separated from the valve seat 34 for cleaning.

For the air fryer 100 of the present embodiment, due to its adjustable steam volume, during cooking ingredients, the opening of the steam valve 3 can be manually or automatically adjusted according to the specific ingredients, to adjust the amount of the discharged steam, and the remaining steam volume in the cooking chamber body 1 better matches the ingredients, and thus the cooking effect and the taste of the ingredients are improved.

Furthermore, if the cold air duct communicates with the steam channel 31, the steam will enter the cold air duct, this causes the cold air duct to become hot and the heat dissipation function to decrease, to cause the electrical components to overheat and generate a safety hazard. To address the adverse effects on the entire machine after adding the steam, this embodiment further improves the air fryer 100, and provides the following solution:

The steam valve 3 has an independent channel communicating with the cooking area of the frying bucket, which is used to discharge the steam inside the frying bucket. The steam valve 3 can be completely separated from the machine body (detachable). The steam valve 3 is provided on the reflecting cover 62, the top portion of the reflecting cover 62 is provided with an opening, a sealing ring is provided between the steam valve 3 and the reflecting cover 62, and the steam valve 3 penetrates through the exhaust window and contacts the top cover (the steam valve 3 and the exhaust window can further be staggered, and does not need to penetrate the exhaust window). This arrangement achieves complete isolation between the steam channel 31 and the heat dissipation channel, solves the problem that the steam will enter the cold air duct, and then causes the cold air duct to heat up, lower the heat dissipation function, and cause the safety hazard of over-temperature of electrical components.

In some embodiments, the steam valve 3 can be extracted from the side wall of the whole air fryer 100 or from the top portion of the whole air fryer 100.

The following is a detailed introduction to the cooking control method and the corresponding air fryer of the present disclosure.

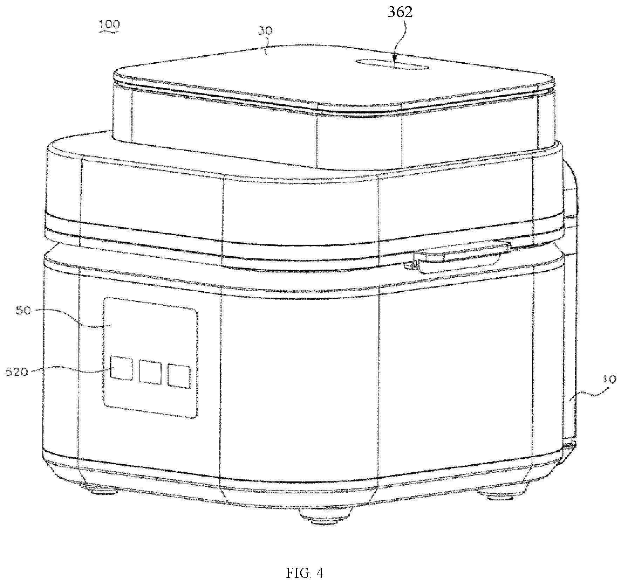

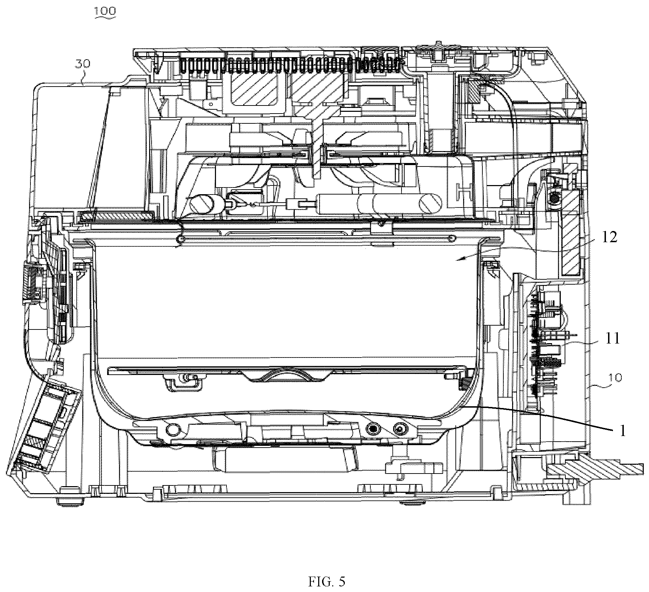

Referring to FIG. 4 and FIG. 5, an embodiment of the present disclosure provides an air fryer 100, and the air fryer 100 is a utensil that can use heat to cook food. Exemplarily, when the air fryer 100 works, it can generate hot air through a heating member (such as a heating pipe) inside the pot, and then use a fan to circulate the hot air inside the pot, to dehydrate the food inside the pot to achieve the effect of frying food.

In the present embodiment, the air fryer 100 comprises a pot body 10 and a pot cover 30, and the pot body 10 can be provided with a cooking chamber 12, and the cooking chamber 12 is used for placing the food to be cooked. The pot cover 30 covers the cooking chamber 12 on the pot body 10 and is used to heat the food inside the cooking chamber 12.

In some possible embodiments, the air fryer 100 is a flip-over utensil, and one side of the pot cover 30 is rotatably connected to the pot body 10. In some other possible embodiments, the air fryer 100 is a pull-out utensil, and the outer shell structure of the pot cover 30 and the outer shell structure of the pot body 10 can be integrally formed and connected or assembled.

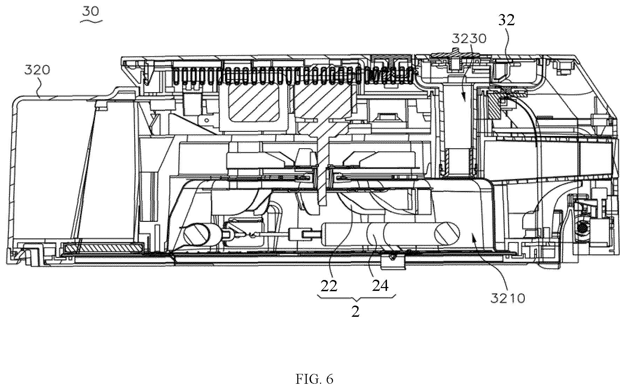

Referring to FIG. 6, the pot cover 30 comprises a mounting shell 320, a hot air device 2 and a water vapor adjustment device. The mounting shell 320 is used to connect the pot body 10, and has the function of fixing and bearing the hot air device 2 and the water vapor adjustment device. In some possible embodiments, the pot body 10 comprises a connecting member, the mounting shell 320 can comprise a mating member matching the connecting member, and through a mating connection between the connecting member and the mating member, the mounting shell 320 can be movably connected to the pot body 10, or the mounting shell 320 can be detachably connected to the pot body 10.

In the present embodiment, the mounting shell 320 is provided with a first mounting chamber 3210 and a water vapor channel 3230, and the first mounting chamber 3210 is located on the side of the mounting shell 320 facing the cooking chamber 12, and is used to accommodate the hot air device 2. The water vapor channel 3230 penetrates through the two opposite sides of the mounting shell 320, and one end of the water vapor channel 3230 communicates with the cooking chamber 12 and the other end communicates with the outside, and during the working process of the air fryer 100, the water vapor (such as the steam generated by the food at a high temperature) inside the cooking chamber 12 can be discharged to the outside through the water vapor channel 3230. Exemplarily, the entirety of the mounting shell 320 can be an integrally formed structure, for example, it is formed by stamping and hot pressing with high polymer materials (for example, plastic), and this makes the overall structure of the mounting shell 320 more sturdy and reliable.

In the present embodiment, the hot air device 2 can comprise the heating device 24 and the hot air fan 22, both the heating device 24 and the hot air fan 22 are disposed in the first mounting chamber 3210, and are used to form hot air blowing towards the cooking chamber 12. The heating device 24 is provided inside the first mounting chamber 3210, and is used to heat the air in the first mounting chamber 3210. In some possible embodiments, the heating device 24 can comprise a heating pipe, and the heating pipe is a heating device made by inserting electric heating wires into a metal pipe (such as a carbon steel pipe, a titanium pipe, a stainless steel pipe, and a copper pipe). In some other possible embodiments, the heating device 24 can comprise a carbon pipe, and the carbon pipe is a heating device that uses carbon fiber as a heat transfer material. The hot air fan 22 is provided at the side of the heating device 24 away from the cooking chamber 12, and is used to convert the high temperature air in the first mounting chamber 3210 into hot air blowing towards the cooking chamber 12. This embodiment does not control the specific implementation method for the hot air fan 22.

In the present embodiment, the water vapor adjustment device can be movably provided in the water vapor channel 3230, and used to adjust the blocking degree for the water vapor channel 3230, and further adjust the discharged amount of the discharged water vapor through the water vapor channel 3230. Exemplarily, there is a negative correlation between the blocking degree for the water vapor channel 3230 and the discharged amount of water vapor. That is, the greater the blocking degree for the water vapor channel 3230 is, the smaller the discharged amount of the water vapor is; on the contrary, the smaller the blocking degree for the water vapor channel 3230 is, the greater the discharged amount of the water vapor is.

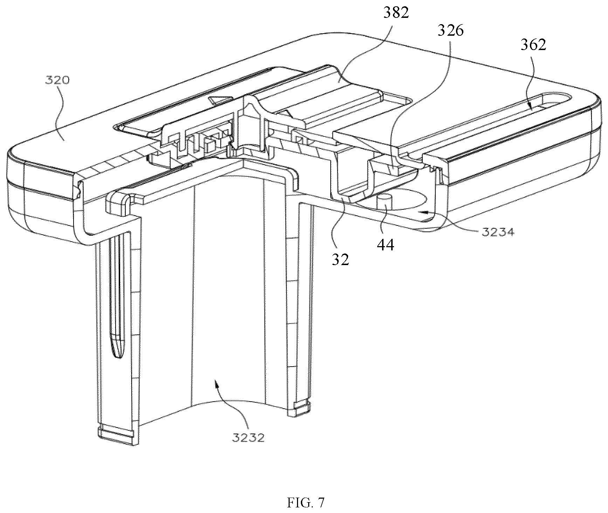

Referring to FIG. 7, the water vapor channel 3230 can comprise a first sub channel 3232 and a second sub channel 3234 which communicate with each other, and the first sub channel 3232 extends along a designated direction and communicates with the cooking chamber 12. An comprised angle between the designated direction and the horizontal plane is greater than or equal to 70°, and less than or equal to 90°, and the water vapor in the cooking chamber 12 can smoothly flow towards the first sub channel 3232. The second sub channel 3234 communicates with the first sub channel 3232, and the second sub channel 3234 penetrates through one side of the mounting shell 320 to form the exhaust port 362, and the water vapor inside the first sub channel 3232 flows successively through the second sub channel 3234 and the exhaust port 362 and then is discharged to the outside.

In the present embodiment, the water vapor adjustment device can comprise the adjustment member 32 and the push button 382, the adjustment member 32 is movably disposed inside the second sub channel 3234 and is used to adjust the blocking degree for the exhaust port 362. In some possible embodiments, the adjustment member 32 can comprise a first target position and a second target position in its motion path, and when the adjustment member 32 moves to the first target position, a portion of the structure of the adjustment member 32 completely blocks the exhaust port 362, to prevent the water vapor inside the cooking chamber 12 from being discharging to the outside. When the adjustment member 32 moves to the second target position, a portion of the structure of the adjustment member 32 does not block or partially blocks the exhaust port 362, and the water vapor inside the cooking chamber 12 can be discharged to the outside. Apparently, the motion path of the adjustment member 32 can further comprise other target positions, and when the adjustment member 32 moves to different target positions, its blocking degrees to the exhaust port 362 are different.

In the embodiment as shown in FIG. 7, the adjustment member 32 can comprise the adjustment plate 326, and the adjustment plate 326 is movably disposed in the second sub channel 3234, and is used to adjust the blocking degree for the exhaust port 362. The push button 382 is disposed on the outer surface of the pot cover 30, and fixedly connected to the adjustment plate 326, and the adjustment plate 326 is brought by the push button 382 to conduct position switching among multiple target positions. Therefore, in the embodiment as shown in FIG. 7, the adjustment member 32 adopts a translation adjusting structure to adjust the blocking degree for the exhaust port 362. In some other possible embodiments, the adjustment member 32 can further adopt a flip-over adjusting structure to adjust the blocking degree for the exhaust port 362, and the present embodiment does not make specific limitation in this regard.

In the present embodiment, referring to FIG. 5 once again, the air fryer 100 can further comprise the control device 11, and the control device 11 can be provided in the pot body 10 of the air fryer 100 and used to control the working process of the air fryer 100. Exemplarily, the control device 11 can be a control chip or a control circuit board integrated with a control chip.

In the embodiment as shown in FIG. 7, the water vapor adjustment device can further comprise a switch assembly 44, and the switch assembly 44 is provided in the second sub channel 3234 and electrically connected to the control device 11.

In some possible embodiments, when the adjustment member 32 moves to the first target position, the adjustment member 32 will resist (for example, press downward) the switch assembly 44 and the switch assembly 44 enters a closed state; when the adjustment member 32 moves to the second target position, the adjustment member 32 does not contact the switch assembly 44 and the switch assembly enters a disconnected state. In some other possible embodiments, when the adjustment member 32 moves to the first target position, the switch assembly 44 enters a disconnected state; on the contrary, when the adjustment member 32 moves to the second target position, the switch assembly 44 enters a closed state. A researcher can flexibly adjust the open or closed state of the switch assembly 44 based on its specific arrangement position and the specific implementation method. For example, the switch assembly 44 may be a microswitch.

In some other possible embodiments, the water vapor adjustment device can further comprise a position sensor (not shown in the figures), and the position sensor is provided in the second sub channel 3234 and is electrically connected to the control device 11. In the present embodiment, the position sensor is disposed opposite to the adjustment member 32 and is used to obtain the position information between the position sensor and the adjustment member 32, and further determines the target position where the adjustment member 32 is located. Exemplarily, the position sensor can be a microswitch, an infrared distance sensor, an ultrasonic distance sensor, etc.

Therefore, the control device 11 in the present embodiment can determine the position information of the water vapor adjustment device through the open or closed state, the open or closed position of the switch assembly 44, or the detection signal output by the position sensor.

In some other possible embodiments, the water vapor adjustment device can further comprise a driving assembly (not shown in the figures), and the driving assembly is in transmission connection to the water vapor adjustment device and electrically connected to the control device 11. Under the control of the control device 11, the driving assembly can drive the water vapor adjustment device to move among multiple target positions and then automatically adjust the blocking degree for the exhaust port 362. Exemplarily, the driving assembly can be a structure such as a linear motor, and an electric cylinder.

Referring to FIG. 4 once again, the air fryer 100 can further comprise a control panel 50, and the control panel 50 is disposed on the outer surface of the air fryer 100 and electrically connected to the control device 11, and is used to obtain the control operation of a user. The control panel 50 can comprise multiple control members 520, and the multiple control members 520 correspond to multiple different functions, for example, a cooking starting function, a cooking reserving function, etc. In the present embodiment, the multiple control members 520 further comprise multiple cooking mode selection control members, and the cooking mode selection control members correspond to the expected water content of the finished product after cooking. For example, the multiple cooking mode selection control members can comprise a "tender baking mode" selection control member and a "crispy baking mode" selection control member. It is not difficult to understand here that when the "tender baking mode" selection control member is triggered by a user, the user expects the finished product to contain more water after cooking, and the taste of the finished product is soft and juicy; when the "crispy baking mode" selection control member is triggered by the user, the user expects the finished product to contain less water after cooking, and the taste of the finished product is crispy and delicious.

Exemplarily, the multiple cooking mode selection control members can correspond to multiple physical buttons one by one, or correspond to multiple virtual options on the touch screen one by one. The multiple cooking mode selection control members can further only correspond to the same physical button or virtual option. It is taken as an example that the multiple cooking mode selection control members corresponding to the same physical button, when the physical button is pressed a single time, it indicates that the user has selected the "tender baking mode"; when the physical button is pressed twice, it indicates that the user has selected the "crispy baking mode". Apparently, the multiple cooking mode selection control members can further correspond to the same control knob, and the control knob can comprise multiple rotation gears, the multiple rotation gears correspond to multiple cooking modes one by one, and this embodiment does not control the specific implementation method for the cooking mode selection control member.

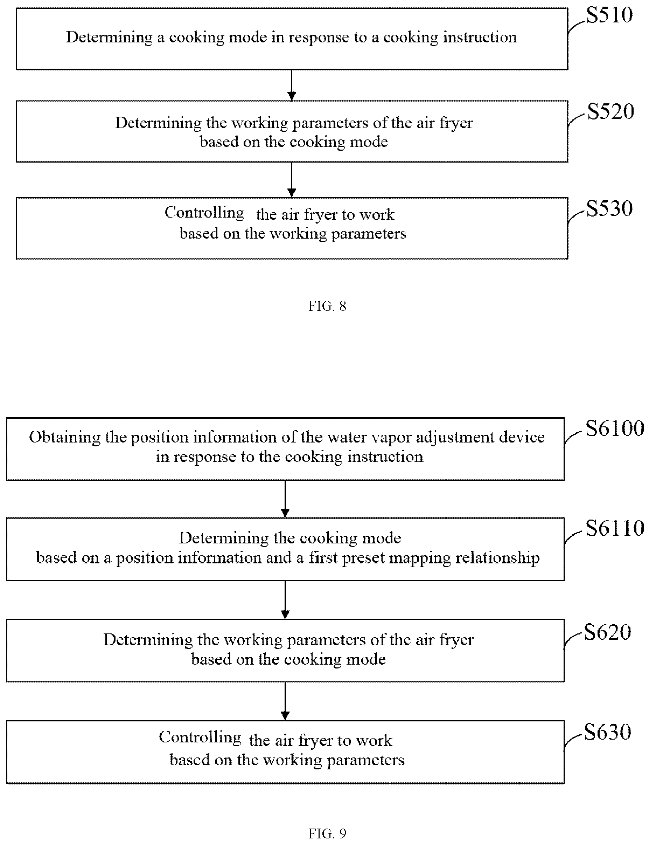

Referring to FIG. 8, it shows a cooking control method provided by an embodiment of the present disclosure. The method is applied to the above air fryer which is provided with the cooking chamber and the water vapor channel, and the water vapor channel communicates with the cooking chamber and the outside. The air fryer comprises the water vapor adjustment device, and the water vapor adjustment device is provided in the water vapor channel and is used to adjust the blocking degree for the water vapor channel. Exemplarily, the method comprises the following process.

S510, in response to a cooking instruction, determining a cooking mode.

In the present embodiment, the cooking instruction is used to instruct the control device to start cooking the food. As an embodiment, the cooking instruction can be generated by triggering the "Cooking Start" control member on the control panel, and at the moment, it indicates that the user has a need to cook the food, then the control device determines the cooking mode in response to the cooking instruction. As another embodiment, the cooking instruction can be automatically generated by the control device, exemplarily, the control device can receive a cooking reserving instruction, determine the cooking reserving time, and then automatically generate the cooking instruction when the current time reaches the cooking reserving time. The control device determines the cooking mode in response to the cooking instruction. The cooking reserving instruction can be generated by triggering the "Cooking Reservation" control member on the control panel.

In the present embodiment, in different cooking modes, the blocking degrees for the water vapor channel are different, that is, the discharged amount of the water vapor corresponding to different cooking modes are different. Therefore, for the same target dish, the water contents of the finished product after cooking are different in different cooking modes. For example, in the case that the discharged amount of the water vapor is relatively large, the water vapor content in the cooking chamber is relatively low, and the food continuously loses water and becomes dry at a high temperature, this results in a low water content in the finished product, and the taste of the finished product tends to be crispy and delicious. On the contrary, when the discharged amount of the water vapor is relatively small, the content of water vapor in the cooking chamber is relatively high, more water vapor helps preserve the water in the food, and this results in a higher water content in the finished product, and the taste of the finished product is softer and more juicy.

In some possible embodiments, a user can manually adjust the blocking degree for the water vapor channel by the water vapor adjustment device and select the cooking mode. For example, if the user expects the taste of finished product to be crispy, he/she can reduce the blocking degree for the water vapor channel by operating the push button; for another example, if the user expects the taste of finished product to be more juicy, he/she can increase the blocking degree for the water vapor channel by operating the push button. Therefore, the control device can determine the corresponding cooking mode by obtaining the position information of the water vapor adjustment device.

In some other possible embodiments, a user can select the cooking mode by operating the multiple cooking mode selection control members on the control panel. Therefore, the control device can determine the corresponding cooking mode by obtaining an electrical signal sent by the control panel. Exemplarily, the specific implementation method for the control device to determine the cooking mode will be described in detail in the following embodiment.

S520, determining the working parameters of the air fryer based on the cooking mode.

In the present embodiment, the working parameters of the air fryer can correspond to the cooking mode, and the working parameters better match the cooking mode, and thus the cooking efficiency is improved. Herein it is taken as an example that the working parameter is a fan rotation speed expected value, if the expected water content of the finished product corresponding to the cooking mode is small, the fan can be controlled to work at a relatively large fan rotation speed expected value to improve the discharging rate of water vapor and thus improve the cooking efficiency. On the contrary, if the expected water content of the finished product corresponding to the cooking mode is relatively large, the fan can be controlled to work at a relatively small fan rotation speed expected value to reduce the discharging rate of water vapor.

Apparently, the working parameters of the air fryer can further comprise the working duration, the expected value of a heating temperature, etc. Exemplarily, the specific implementation method for the control device to determine the working parameters of the air fryer will be detailed in the following embodiment.

S530, controlling the air fryer to work based on the working parameters.

In the present embodiment, the control device will control the air fryer to work based on the working parameters, and the water content of the finished product after cooking can be close to the expected water content of the finished product corresponding to the cooking mode.

The present embodiment provides a cooking control method, the method is applied to an air fryer which is provided with the water vapor adjustment device, and as the water vapor adjustment device can adjust the blocking degree for the water vapor channel, and then the discharged amount of water vapor in the cooking chamber can be adjusted. For the same target dish, the discharged amount of water vapor will affect the taste of the finished product, and this makes the tastes of the finished product more diverse.

Referring to FIG. 9, it shows a cooking control method according to an embodiment of the present disclosure. In the method, the cooking mode is determined according to the current position information of the water vapor adjustment device.

Exemplarily, the method comprises the following process.

S610, in response to a cooking instruction, determining a cooking mode.

In the present embodiment, step S610 can comprise the steps of S6100 and S6110.

S6100, in response to the cooking instruction, obtaining the position information of the water vapor adjustment device.

In the present embodiment, the position information indicates the blocking degree for the water vapor channel by the water vapor adjustment device, and the blocking degree is positively correlated with the water content of the finished product. Exemplarily, the smaller the blocking degree is, the greater the amount of the water vapor discharged from the cooking chamber is, and the lower the water content of the finished product is. On the contrary, the greater the blocking degree is, the smaller the amount of the water vapor discharged from the cooking chamber is, and the higher the water content of the finished product is.

In some possible embodiments, the water vapor adjustment device can comprise an adjustment member and a switch assembly. The control device can determine the position information of the adjustment member based on the open or closed state of the switch assembly.

Exemplarily, S6100 can comprise the steps of S6102 and S6104.

S6102, in response to the cooking instruction, obtaining the open or closed state of the switch assembly.

In the present embodiment, the control device can obtain the electrical signal sent by the switch assembly in response to the cooking instruction, and determine the open or closed state of the switch assembly based on the electrical signal. Exemplarily, in the case that the electrical signal sent by the switch assembly is a high level signal, it is determined that the open or closed state of the switch assembly is a closed state. In the case that the electrical signal sent by the switch assembly is a low level signal, it is determined that the open or closed state of the switch assembly is a disconnected state. Exemplarily, the high level signal can be a signal with a signal amplitude greater than or equal to 3.5V, and the low level signal can be a signal with a signal amplitude less than or equal to 1V.

S6104, determining the position information of the adjustment member based on the open or closed state and a second preset mapping relationship.

In the present embodiment, the second preset mapping relationship indicates the corresponding relationship between different open or closed states and different position information. Exemplarily, the second preset mapping relationship can be a mapping table, and a researcher can determine the mapping table based on the specific arrangement position between the adjustment member and the switch assembly and the specific implementation method for the switch assembly.

Referring to Table-1, Table-1 shows a mapping table that indicates the corresponding relationship between different open or closed states and different position information.

**Table-1**

| Open or closed state of the switch assembly | Position information of the adjustment member |
|---|---|
| Closed state | First target position |
| Disconnected state | Second target position |

Exemplarily, it is taken as an example that the open or closed state of the switch assembly determined by the control device is a closed state, the control device can determine that the adjustment member is currently at the first target position by looking up Table-1 above.

In some other possible embodiments, the water vapor adjustment device can comprise the adjustment member and the position sensor. The position sensor is used to obtain the distance information between the position sensor and the adjustment member, and the control device determines the position information of the adjustment member based on the distance information. Exemplarily, in the case that the distance information output by the position sensor is a first distance, the control device can determine that the position information of the adjustment member is the first target position; in the case the distance information output by the position sensor is a second distance, the control device can determine that the position information of the adjustment member is the second target position.

Exemplarily, the first distance is not equal to the second distance.

It is not difficult to understand here that the open or closed state of the switch assembly only comprises two states: a closed state and a disconnected state, and therefore, the position information of the adjustment member determined based on the open or closed state only has two types. In the case of using the position sensor, the position sensor can obtain more than two pieces of position information, for example, in the case that the distance information output by the position sensor is a third distance, the control device can determine that the position information of the adjustment member is a third target position, and the third distance can be located between the first distance and the second distance. In this case, the control device can determine multiple position information corresponding to the adjustment member, and the multiple position information and multiple cooking modes correspond to each other one by one, and this enriches the application scenarios of the air fryer.

S6110, determining the cooking mode based on a position information and a first preset mapping relationship.

In the present embodiment, the first preset mapping relationship indicates the corresponding relationship between different position information and different cooking modes. Exemplarily, the first preset mapping relationship can be a mapping table, and a researcher can determine the mapping table based on the specific arrangement position of the adjustment member.

Referring to Table-2, Table-2 shows a mapping table that indicates the corresponding relationship between different position information and different cooking modes.

**Table-2**

| Position information of the adjustment member | Cooking mode |
|---|---|
| First target position | First mode |
| Second target position | Second mode |

For the same target dish, the water content of the finished product after cooking in the first mode is greater than that of the finished product after cooking in the second mode. Exemplarily, the first mode can be the "tender baking mode", and the second mode can be the "crispy baking mode".

Exemplarily, it is taken as an example that the position information of the adjustment member determined by the control device is the first target position, the control device can determine that the cooking mode is the first mode by looking up Table-2 above.

It should be noted here that the above Table-2 is only schematic, and the air fryer can further comprise other cooking modes, such as a third mode. The water content of the finished product corresponding to the third mode can be between the water content of the finished product corresponding to the first mode and the water content of the finished product corresponding to the second mode, and the third mode can correspond to the third target position. Exemplarily, a researcher can determine the specific number of cooking modes based on the actual use needs of the air fryer, and this embodiment does not make any limitation to this.

S620, determining the working parameters of the air fryer based on the cooking mode.

S630, controlling the air fryer to work based on the working parameters.

In some possible embodiments, the air fryer is in communication connection to a terminal device. For example, the air fryer can be accessed to a smart kitchen system, and the terminal device can be a terminal panel or a mobile device (for example, a smart phone, tablet computer, etc.) that is further accessed to the smart kitchen system. Exemplarily, before executing the step S630, the control device further comprises a step A100 and a step A200.

Step A100, sending cooking mode confirmation information to the terminal device.

As the cooking mode is selected and determined by a user who manually adjusts the water vapor adjustment device, once the user forgets adjusting the water vapor adjustment device, the case may occur that the user's expected cooking mode is different from the current cooking mode corresponding to the air fryer, and this further affects user experience. For example, if the air fryer is currently in the tender baking mode while the user expects the cooking mode to be the crispy baking mode, it will render that the taste of the finished product after cooking is inconsistent with the user's expected taste, and this results in a poor user experience.

In the present embodiment, before controlling the air fryer to work, the control device will send the cooking mode confirmation information to the terminal device. Exemplarily, the cooking mode confirmation information can be "the current cooking mode of the air fryer is the tender baking mode, please confirm".

Step A200, in response to the confirmation instruction corresponding to the cooking mode confirmation information, executing step S630.

As an embodiment, the terminal device will display the cooking mode confirmation information on its screen, and display the corresponding confirmation control member and change control member at the same time. If the confirmation control member is triggered, the terminal device will generate and send a confirmation instruction corresponding to the cooking mode confirmation information to the air fryer, and in response to the confirmation instruction, the control device executes step S630.

As another embodiment, after the terminal device sends the cooking mode confirmation information, if the above confirmation instruction is not received in a designated time, the terminal device executes step S630, to ensure the smooth progress of the cooking. The designated time can be 3 minutes, 5 minutes, etc.

In some possible embodiments, after the step A100, the step A300 to step A500 may be comprised.

Step A300, in response to a cooking mode change instruction sent by the terminal device, determining a target cooking mode.

In the present embodiment, if the change control member corresponding to the cooking mode confirmation information is triggered, the terminal device will generate and send a cooking mode change instruction to the air fryer, and the control device will then determine the target cooking mode.

As an embodiment, in the case that there are only two cooking modes, the control device determines another cooking mode which is different from the current cooking mode of the air fryer to be the target cooking mode. For example, if the current cooking mode of the air fryer is the tender baking mode, the target cooking mode is the crispy baking mode.

As another embodiment, when the number of the cooking modes is greater than two, in response to the cooking mode change instruction sent by the terminal device, the control device sends cooking mode selection information to the terminal device, and the cooking mode selection information comprises multiple cooking modes to be selected. In response to the selection instructions corresponding to the cooking mode selection information, the control device further determines the target cooking mode.

Exemplarily, the terminal device will display the cooking mode selection information on its screen, and simultaneously display multiple corresponding selection control members, the multiple selection control members correspond to multiple cooking modes one by one; if the selection control member corresponding to the "crispy baking mode" is triggered, the terminal device will generate and send the selection instruction corresponding to the crispy baking mode to the air fryer, and based on this selection instruction, the control device determines that the target cooking mode is the crispy baking mode.

Step A400, determining the target position information of the water vapor adjustment device based on the target cooking mode and the first preset mapping relationship.

Exemplarily, for the relevant introduction of the first preset mapping relationship, reference can be made to the relevant introduction in step S6110. Here it is further taken as an example that the first preset mapping relationship is the mapping table shown in Table-2, in the case that the target cooking mode determined by the control device is the crispy baking mode (that is, the second mode), by looking up Table-2 above, it can be determined that the target position information of the water vapor adjustment device corresponding to the crispy baking mode is the second target position.

Step A500, controlling the water vapor adjustment device to work based on the target position information of the water vapor adjustment device.

In the present embodiment, the air fryer is provided with a driving assembly for driving the water vapor adjustment device; based on the target position information of the water vapor adjustment device, the control device controls the driving assembly to move the water vapor adjustment device to the target position corresponding to the target position information. For example, in the case that the target position information is the second target position, the water vapor adjustment device is moved to the second target position.

Therefore, the control device in this embodiment can avoid the case of the inconsistency between the taste of the finished product after cooking and the user's expected taste by sending the cooking mode confirmation information to the terminal device, and thus the user experience is ensured. Furthermore, in the case that the current cooking mode of the air fryer is inconsistent with the user's expected cooking mode, the air fryer can automatically adjust the position of the water vapor adjustment device, and the working process of the air fryer is more automated and intelligent.

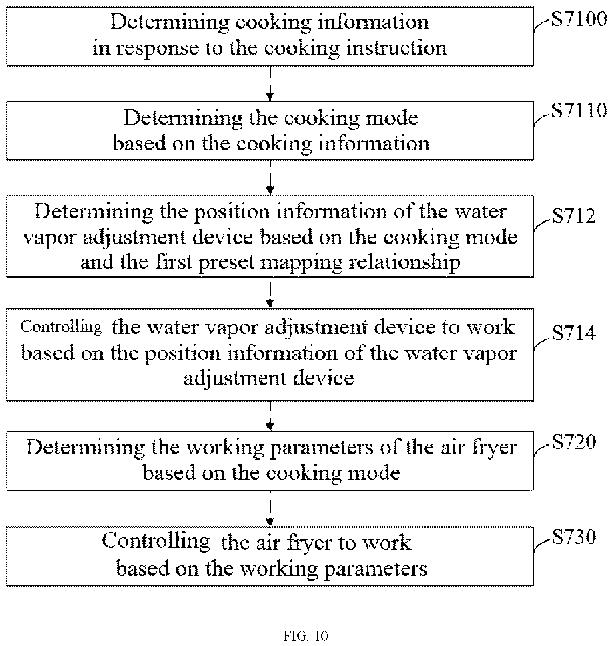

Referring to FIG. 10, it shows a cooking control method provided by the embodiment of the present disclosure. In the present embodiment, the air fryer comprises multiple cooking mode selection control members, and the cooking mode selection control members correspond to the expected water contents of the finished product after cooking. The cooking mode is selected and determined by a user through the multiple cooking mode selection control members. Exemplarily, the method comprises the following process.

Step S710, in response to the cooking instruction, determining the cooking mode.

In the present embodiment, the step S710 can comprise step S7100 and step S7110.

Step S7100, in response to the cooking instruction, determining cooking information.

In the present embodiment, the cooking information is generated by triggering the cooking mode selection control member, and therefore, in the case that the control device receives the cooking instruction, the control device will further receive the cooking information.

In some possible embodiments, the cooking instruction can be generated by triggering the "Cooking Start" control member on the control panel, and in this case, the control device will receive the cooking information before or after receiving the cooking instruction. For example, in the case that a user starts the air fryer through the "Cooking Start" control member and then selects the desired cooking mode through the cooking mode selection control member, the control device will receive the above cooking information after receiving the cooking instruction. Apparently, the control device will further receive the above cooking information before receiving the cooking instruction. In this case, the control device can store the cooking information in the memory of the control device, and then, upon receiving the cooking instruction, the cooking information can be determined by reading the relevant data in the memory.

In some other possible embodiments, the cooking instruction can be automatically generated by the control device, for example, in the case that the current time reaches a cooking reserving time, the cooking instruction is generated automatically. Therefore, when a user makes a working appointment for the air fryer, he/she will select the desired cooking mode through the cooking mode selection control member. In this case, the cooking information can be stored in the memory of the control device in advance, in the case that the control device automatically generates a cooking instruction, the cooking information can be determined by reading the relevant data in the memory.

Step S7110, determining the cooking mode based on the cooking information.

As an embodiment, the number of cooking mode selection control members is multiple, the multiple cooking mode selection control members correspond to the multiple cooking modes one by one. Exemplarily, when the control device receives the cooking information sent by the "tender baking mode" selection control member, the control device determines that the cooking mode is the tender baking mode based on this cooking information.

As another embodiment, the number of the cooking mode selection control member is one, and different cooking modes correspond to different control operations for the cooking mode selection control member. Exemplarily, a control operation mapping table can be stored in the control device in advance, and the control device determines the corresponding cooking mode based on the control operation mapping table. For example, in the case that the cooking information is a double-click operation on the cooking mode selection control member, the control device can determine that the cooking mode is the crispy baking mode. For another example, in the case that the cooking information is a single-click operation on the cooking mode selection control member, the control device can determine that the cooking mode is the tender baking mode.

In the present embodiment, after step S710, the step S712 and the step S714 are further comprised.

Step S712, determining the position information of the water vapor adjustment device based on the cooking mode and the first preset mapping relationship.

In the present embodiment, the position information indicates the blocking degree for the water vapor channel by the water vapor adjustment device, and the blocking degree is positively correlated with the water content of the finished product. The first preset mapping relationship indicates the corresponding relationship between different position information and different cooking modes.

Exemplarily, for the relevant introduction of the first preset mapping relationship, reference can be made to the relevant introduction in step S6110. Here it is further taken as an example that the first preset mapping relationship is the mapping table shown in Table-2, in the case that the cooking mode determined by the control device is the crispy baking mode (that is, the second mode), by looking up Table-2 above, it can be determined that the position information of the water vapor adjustment device corresponding to the crispy baking mode is the second target position.

Step S714, controlling the water vapor adjustment device to work based on the position information of the water vapor adjustment device.

In the present embodiment, the air fryer is provided with a driving assembly for driving the water vapor adjustment device; based on the position information of the water vapor adjustment device, the control device controls the driving assembly to move the water vapor adjustment device to the corresponding target position. For example, in the case that the position information is the second target position, the water vapor adjustment device is moved to the second target position.

Step S720, determining the working parameters of the air fryer based on the cooking mode.

Step S730, controlling the air fryer to work based on the working parameters.

The present embodiment provides a cooking control method, the control device in the method can make a dynamic adjustment to the position of the water vapor adjustment device based on the cooking mode selected by a user, and the working process of the air fryer is more automated and intelligent.

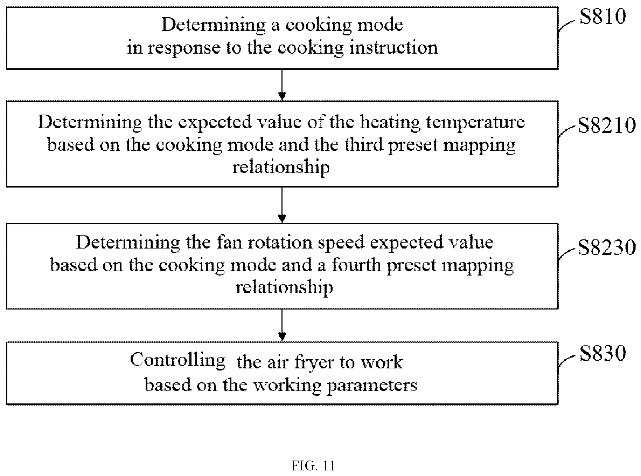

Referring to FIG. 11, it shows a cooking control method provided by the embodiment of the present disclosure. In the present embodiment, the cooking mode at least comprises a first mode and a second mode, and for the same target dish, the water content of the finished product after cooking in the first mode is greater than that of the finished product after cooking in the second mode. Exemplarily, the method comprises the following process.

Step S810, in response to the cooking instruction, determining a cooking mode.

Step S820, determining the working parameters of the air fryer based on the cooking mode.

In some possible embodiments, the working parameters of the air fryer comprise an expected value of the heating temperature, and exemplarily, step S820 can comprise the step S8210.

Step S8210, determining the expected value of the heating temperature based on the cooking mode and the third preset mapping relationship.

In the present embodiment, the expected value of the heating temperature is the target value of the heating temperature, and the third preset mapping relationship indicates the corresponding relationship between different expected values of the heating temperature and different cooking modes. Exemplarily, the third preset mapping relationship can be a mapping table, and a researcher can summarize the mapping table based on a large amount of experimental data.

Exemplarily, the expected value of the heating temperature corresponding to the first mode is less than the expected value of the heating temperature corresponding to the second mode. As the water content of the finished product after cooking in the first mode is greater than that of the finished product after cooking in the second mode, the taste of the finished product in the second mode is crispy for the same target dish. Therefore, during the cooking process of the target dish, a relatively high heating temperature can be used to allow the water in the target dish to quickly detach from the inside of the ingredients, and this accelerates the cooking efficiency.

Based on the same reasons, for the same target dish, the taste of the finished product in the first mode is soft. Therefore, during the cooking process of the target dish, a relatively low heating temperature can be used to allow the target dish to retain water and ensure the taste of the finished product. Exemplarily, the expected value of the heating temperature corresponding to the first mode can be greater than or equal to 150°C, and less than or equal to 160°C, for example, 150°C, 155°C, 160°C, etc. The expected value of the heating temperature corresponding to the second mode can be greater than or equal to 180°C, and less than or equal to 200°C, for example, 180°C, 190°C, 200°C, etc.

In some possible embodiments, the air fryer can comprise multiple working stages, for example, a preheating stage, a steaming stage, an air frying stage, a heat preservation stage, etc. Exemplarily, the third preset mapping relationship further indicates the corresponding relationships among different working stages, different expected values of the heating temperature and different cooking modes. The control device can determine the expected values of the heating temperature corresponding to different cooking modes at different working stages based on the third preset mapping relationship. At the same working stage, the expected value of the heating temperature corresponding to the first mode is less than the expected value of the heating temperature corresponding to the second mode.

In some other possible embodiments, the working parameters of the air fryer comprise a fan rotation speed expected value, and exemplarily, the step S820 may comprise a step S8230.

Step S8230, determining the fan rotation speed expected value based on the cooking mode and a fourth preset mapping relationship.

In the present embodiment, the fan rotation speed expected value is a fan rotation speed target value, and the fourth preset mapping relationship indicates the corresponding relationship between different fan rotation speed expected values and different cooking modes. Exemplarily, the fourth preset mapping relationship can be a mapping table, and a researcher can summarize the mapping table based on a large amount of experimental data.

Exemplarily, the fan rotation speed expected value corresponding to the first mode is less than or equal to the fan rotation speed expected value corresponding to the second mode. As the water content of the finished product after cooking in the first mode is greater than that of the finished product after cooking in the second mode, the taste of the finished product in the second mode is crispy for the same target dish. Therefore, during the cooking process of the target dish, a relatively high fan rotation speed can be used to allow the water vapor inside the cooking chamber to be discharged more quickly to the outside, and this improves the discharge rate of the water vapor and accelerates the cooking efficiency.

Based on the same reasons, for the same target dish, the taste of the finished product in the first mode is soft. Therefore, during the cooking process of the target dish, a relatively small fan rotation speed can be used to decrease the discharge rate of the water vapor, and the target dish can retain water to ensure the taste of the finished product. Exemplarily, the fan rotation speed expected value corresponding to the first mode can be greater than or equal to 1200 rpm and less than or equal to 1600 rpm, for example, 1200 rpm, 1400 rpm, 1600 rpm, etc. The fan rotation speed expected value corresponding to the second mode can be greater than or equal to 1600 rpm and less than or equal to 2000 rpm, for example, 1600 rpm, 1800 rpm, 2000 rpm, etc.

In some possible embodiments, the air fryer may comprise multiple working stages, for example, a preheating stage, a steaming stage, an air frying stage, a heat preservation stage, etc. Exemplarily, the fourth preset mapping relationship further indicates the corresponding relationships among different working stages, different fan rotation speed expected values and different cooking modes. The control device can determine the fan rotation speed expected values corresponding to different cooking modes at different working stages based on the fourth preset mapping relationship. At the same working stage, the fan rotation speed expected value corresponding to the first mode is less than or equal to the fan rotation speed expected value corresponding to the second mode.

It should be noted that one of the step S8210 and the step S8230 can be executed, or both of them can be executed. In the case that one of the step S8210 and the step S8230 is executed, if the control device only executes the step S8210, the fan rotation speed expected value corresponding to different cooking modes can be a default value; if the control device only executes the step S8230, the expected value of the heating temperature corresponding to different cooking modes can be a default value. In the case that both of S8210 and S8230 are executed, the control device can first execute the step S8210 and then execute the step S8230; alternatively, it can first execute the step S8230 and then the step S8210; or it can execute S8210 and S8230 simultaneously, and this embodiment does not provide specific limitations on this.

Step S830, controlling the air fryer to work based on the working parameters.

In the present embodiment, the control device works based on the determined expected value of the heating temperature, or/and, the determined fan rotation speed expected value.

The present embodiment provides a cooking control method, the method is applied to an air fryer which is provided with the water vapor adjustment device, and as the water vapor adjustment device can adjust the blocking degree for the water vapor channel, then the discharged amount of water vapor from the cooking chamber can be adjusted. For the same target dish, the discharged amount of water vapor will affect the taste of the finished product, and this makes the tastes of the finished product more diverse. Furthermore, the working parameters of the air fryer correspond to the cooking modes, and the working parameters better match the cooking modes, and this can improve the cooking efficiency of the air fryer.

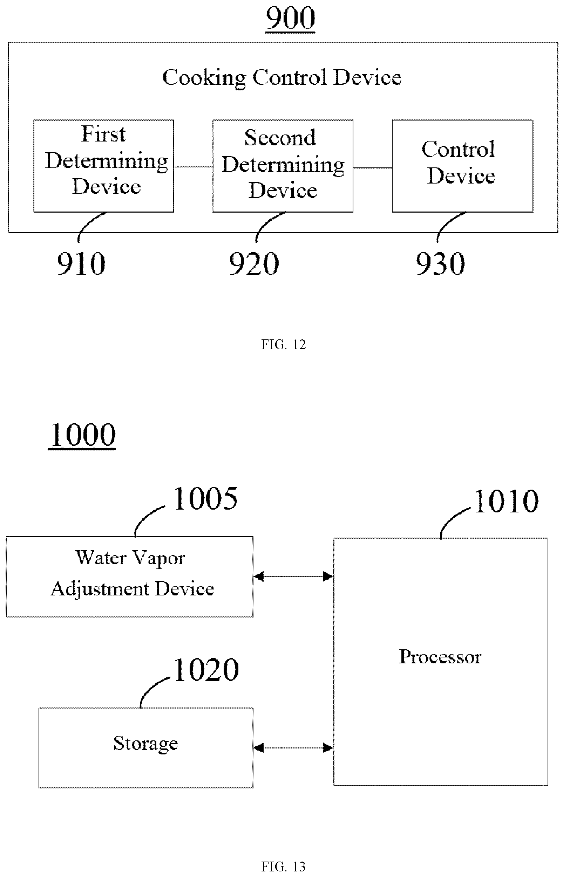

Referring to FIG. 12, it shows a block diagram of the structure of a cooking control device 900 according to the embodiments of the present disclosure, and the cooking control device 900 is applied to the above air fryer which is provided with the cooking chamber and the water vapor channel, and the water vapor channel communicates with the cooking chamber and the outside. The air fryer comprises the water vapor adjustment device, and the water vapor adjustment device is provided in the water vapor channel and used to adjust the blocking degree for the water vapor channel.

Exemplarily, the cooking control device 900 can comprise a first determining device 910, a second determining device 920 and a control device 930. The first determining device 910 is used to determine the cooking mode in response to the cooking instruction; and in different cooking modes, the blocking degree for the water vapor channel is different, and the finished product of the same target dish after cooking in different cooking modes has different water contents. The second determining mode 920 is used to determine the working parameters of the air fryer based on the cooking mode. The control device 930 is used to control the air fryer to work based on the working parameters.

In some possible embodiments, the first determining device 910 is specifically used to obtain the position information of the water vapor adjustment device in response to the cooking instruction; the position information indicates the blocking degree for the water vapor channel by the water vapor adjustment device, and the blocking degree is positively correlated with the water content of the finished product. The cooking mode is determined based on the position information and the first preset mapping relationship; and the first preset mapping relationship indicates the corresponding relationship between different position information and different cooking modes.

In some possible embodiments, the water vapor adjustment device comprises an adjustment member and a switch assembly. The first determining device 910 is specifically used to obtain the open or closed state of the switch assembly in response to the cooking instruction. The position information of the adjustment member is determined based on the open or closed state and the second preset mapping relationship; the second preset mapping relationship indicates the corresponding relationship between different open or closed states and different position information.

In some possible embodiments, the air fryer is in communication connection to a terminal device, and the cooking control device 900 further comprises an information sending device (not shown in the figure) and a first instruction response device (not shown in the figure). Before the control device 930 controls the air fryer to work based on the working parameters, the information sending device is used to send cooking mode confirmation information to the terminal device. In response to a confirmation instruction corresponding to the cooking mode confirmation information, the first instruction response device executes the step of controlling the air fryer to work based on the working parameters.

In some possible embodiments, the cooking control device 900 further comprises a second instruction response device (not shown in the figures), a position determining device (not shown in the figures) and an adjustment device (not shown in the figures). After the information sending device sends the cooking mode confirmation information to the terminal device, the second instruction response device is used to determine the target cooking mode in response to the cooking mode change instruction sent by the terminal device. The position determining device is used to determine the target position information of the water vapor adjustment device based on the target cooking mode and the first preset mapping relationship. The adjustment device is used to control the water vapor adjustment device to work based on the target position information of the water vapor adjustment device.

In some possible embodiments, the air fryer comprises multiple cooking mode selection control members; and the cooking mode selection control members correspond to the expected water content of the finished product after cooking. The first determining device 910 is specifically used to determine the cooking information in response to the cooking instruction; the cooking information is generated by triggering the cooking mode selection control member. The cooking mode is determined based on the cooking information.

In some possible embodiments, the position determining device is used to determine the position information of the water vapor adjustment device based on the cooking mode and the first preset mapping relationship; the position information indicates the blocking degree for the water vapor channel by the water vapor adjustment device, and the blocking degree is positively correlated with the water content of the finished product; the first preset mapping relationship indicates the corresponding relationship between different position information and different cooking modes. The adjustment device is used to control the water vapor adjustment device to work based on the position information of the water vapor adjustment device.

In some possible embodiments, the cooking mode at least comprises a first mode and a second mode, and for the same target dish, the water content of the finished product after cooking in the first mode is greater than that of the finished product after cooking in the second mode; the working parameters of the air fryer comprise the expected value of the heating temperature. The second determining device 920 is specifically used to determine the expected value of the heating temperature based on the cooking mode and the third preset mapping relationship; the third preset mapping relationship indicates the corresponding relationship between different expected values of the heating temperature and different cooking modes; and the expected value of the heating temperature corresponding to the first mode is less than the expected value of the heating temperature corresponding to the second mode.

In some possible embodiments, the cooking mode at least comprises a first mode and a second mode, and for the same target dish, the water content of the finished product after cooking in the first mode is greater than that of the finished product after cooking in the second mode; and the working parameters of the air fryer comprise the fan rotation speed expected value. The second determining device 920 is specifically used to determine the fan rotation speed expected value based on the cooking mode and the fourth preset mapping relationship; the fourth preset mapping relationship indicates the corresponding relationship between different fan rotation speed expected values and different cooking modes; and the fan rotation speed expected value corresponding to the first mode is less than or equal to the fan rotation speed expected value corresponding to the second mode.

A person skilled in the art can clearly understand that for the convenience and conciseness of the description, reference can be made to the corresponding process of the preceding method embodiments for describing the specific working process of the devices and devices, which are not repeated herein.

In the several embodiments provided in the present disclosure, the coupling between devices can be electrical, mechanical, or other forms of coupling.

In addition, in each embodiment of the present disclosure, the functional devices can be integrated into one processing device, or each device can exist physically and separately, or two or more than two devices can be integrated into one device. The integrated devices mentioned above can be implemented in the form of hardware or in the form of software functional devices.

The present embodiment provides a cooking control device, and the device is applied to the air fryer with the water vapor adjustment device; as the water vapor adjustment device can adjust the blocking degree for the water vapor channel, and can further adjust the discharged amount of the water vapor in the cooking chamber. For the same target dish, the discharged amount of water vapor will affect the taste of the finished product, and this makes the tastes of the finished product more diverse.

Referring to FIG. 13, it shows an air fryer 1000 provided by an embodiment of the present disclosure, the air fryer 1000 is provided with a cooking chamber and a water vapor channel, and the water vapor channel communicates with the cooking chamber and the outside. The air fryer 1000 can comprise a water vapor adjustment device 1005, one or more processors 1010, a memory 1020 and one or more application programs. The one or more application programs are stored in the memory 1020 and configured to be executed by one or more processors 1010, and the one or more application programs are used to execute the method described in the above embodiments.

The water vapor adjustment device 1005 is provided in the water vapor channel, and used to adjust the blocking degree for the water vapor channel. Exemplarily, for the specific implementation method for the water vapor adjustment device 1005, reference can be made to the relevant introduction in the above hardware embodiments, which are not repeated here.

The processor 1010 may comprise one or more processing cores. The processor 1010 utilizes various interfaces and circuits to connect various parts of the entire battery management system, executes various functions of the battery management system and processes data by running or executing instructions, programs, code sets, or instruction sets stored in the memory 1020, as well as calling data stored in memory 1020. In some embodiments, the processor 1010 can be implemented with at least one hardware form among Digital Signal Processing (DSP), Field Programmable Gate Array (FPGA), or Programmable Logic Array (PLA). The processor 1010 can integrate one or a combination of a Central Processing Unit (CPU), a Graphics Processing Unit (GPU), a modem, etc. The CPU mainly processes an operating system, a user interface, an application program, etc.; the GPU is used for graphic rendering and drawing of displayed content; and the modem is used to process wireless communication. It can be understood that the above-mentioned modem may not be integrated into the processor 1010 and is implemented separately through a communication chip.

The memory 1020 can comprise a random access memory (RAM) and can further comprise a read only memory (ROM). The memory 1020 can be used to store an instruction, a program, a code, a code set, or an instruction set. The memory 1020 may comprise a storage program area and a storage data area, and the storage program area may store an instruction for implementing an operating system, an instruction for implementing at least one function (for example, a touch function, a sound playback function, an image playback function, etc.), an instruction for implementing the above various method embodiments, etc. The storage data area can further store data (for example, a phone book, audio and video data, chat record data), etc. created during the use of electronic device diagrams.

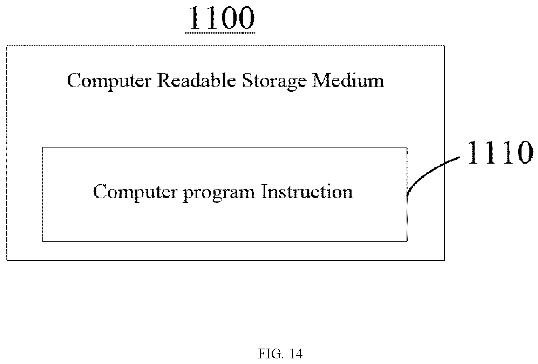

Referring to FIG. 14, it shows a computer-readable storage medium 1100, and a computer program instruction 1110 is stored in the computer-readable storage medium 1100, and the computer program instruction 1110 can be called by a processor to execute the method described in the above embodiments.

The computer-readable storage medium 1100 can be a flash memory, an electrically erasable programmable read only memory (EEPROM), an electrical programmable read only memory (EPROM), a hard disk, or a read only memory (ROM), etc. In some embodiments, the computer-readable storage medium 1100 comprises a non-transitory computer-readable storage medium. The computer-readable storage medium 1100 has a storage space of the computer program instruction 1110 that executes any of the above method steps in the above method. These computer program instructions 1110 can be read from or written into one or more computer program products.

The methodologies described herein may be implemented by various means depending upon applications according to particular features and/or examples. For example, such methodologies may be implemented in hardware, firmware, and/or combinations thereof, along with software. In a hardware implementation, for example, a processor may be implemented within one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, electronic devices, other devices units designed to perform the functions described herein, and/or combinations thereof.

The computer readable storage medium can be a tangible device that can retain and store instructions for use by an instruction execution device. The computer readable storage medium may be, for example, but is not controlled to, an electronic storage device, a magnetic storage device, an optical storage device, an electromagnetic storage device, a semiconductor storage device, or any suitable combination of the foregoing. A non-exhaustive list of more specific examples of the computer readable storage medium comprises the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media, or electrical signals transmitted through a wire.

In the specification of the present disclosure, the terms of "connected to", "mount", "fixing" and the like should be understood in a broad sense, for example, the term "connected to" may be a fixed connection, and may further be a removable connection, or an integral connection; and the term may be a direct connection and may further be an indirect connection through an intermediate medium. A person of ordinary skills in the art could understand the specific meanings of the terms in the present disclosure according to specific situations.

In the description of the present specification, the descriptions of the phrases "one embodiment", "some embodiments" and "specific embodiments" and the like mean that the specific features, structures, materials or characteristics described in combination with the embodiment(s) or example(s) are comprised in at least one embodiment or example of the present disclosure. In the specification, the schematic representation of the above phrases does not necessarily refer to the same embodiment or example. Moreover, the particular features, structures, materials or characteristics described may be combined in a suitable manner in any one or more of the embodiments or examples.

## Claims

1. An air fryer (1000, 100), comprising:
a housing (5);
a partition board (6), mounted in the housing (5) and separating a space in the housing (5) into a first chamber body and a second chamber body which are arranged independently, with a steam inlet provided in the partition board (6);
a cooking chamber body (1), located inside the second chamber body and communicating with the steam inlet;
a hot air device (2) for conveying hot air to the cooking chamber body (1); and
a steam valve (3), comprising a steam channel (31) and an adjustment member (32) that moves, wherein the steam channel (31) communicates with the steam inlet, the steam channel (31) comprises a first opening, and the adjustment member (32) adjusts a size of a cross section of the steam channel (31) or an opening size of the first opening,
**characterized in that**
the partition board (6) comprises a reflecting cover (62), which is located at a side of the hot air device (2) away from the cooking chamber body (1), with the steam inlet provided on the reflecting cover (62);
wherein
the steam valve (3) is arranged at an opening provided on a top portion of the reflecting cover (62); and
the steam channel (31) is provided independently and communicates with the cooking chamber body (1) through the steam inlet; and
a sealing member (7) is provided between the reflecting cover (62) of the partition board (6) and the steam valve (3), wherein the sealing member (7) enables a sealing connection between the reflecting cover (62) and the steam valve (3).

2. The air fryer (1000, 100) according to claim 1, wherein,
one end of the adjustment member (32) is provided with a blocking member (322); when the blocking member (322) moves along a first direction, an opening area of the first opening decreases gradually, when the blocking member (322) moves along a second direction, the opening area of the first opening increases gradually; wherein the first direction is opposite to the second direction.

3. The air fryer (1000, 100) according to claim 2, wherein,
an operating switch (38) is provided at the end of the adjustment member (32) away from the first opening along the first direction, and the operating switch (38) is configured to drive the blocking member (322) to move along the first direction or the second direction.

4. The air fryer (1000, 100) according to claim 3, wherein,
the steam valve (3) further comprises a detection member (42), a trigger part (324) is provided on the adjustment member (32), and the trigger part (324) triggers the detection member (42) in a moving process to prompt a position of the blocking member (322).

5. The air fryer (1000, 100) according to claim 4, wherein,
the trigger part (324) is a first protrusion formed by the blocking member (322) along a direction perpendicular to the first direction and having a direction away from the first opening, and a top end of the first protrusion has a curved surface or an inclined surface for triggering the detection member (42).

6. The air fryer (1000, 100) according to claim 4, wherein, the steam valve (3) further comprises:
a valve seat (34); and
a valve cover (36), mounted on the valve seat (34), wherein the valve cover (36) is provided with an exhaust port (362), at least a portion of the steam channel (31) is enclosed by the valve cover (36) and the valve seat (34) and communicates with the exhaust port (362).

7. The air fryer (1000, 100) according to claim 6, wherein,
the adjustment member (32) is movably provided between the valve seat (34) and the valve cover (36), an operating window (364) is provided in the valve cover (36), and the operating window (364) is an avoidance position formed by a depression of the valve cover (36) towards a direction of the valve seat (34); the operating switch (38) is movably mounted on the valve cover (36) and/or the valve seat (34), and located inside the avoidance position, a length of the avoidance position in the first direction is greater than or equal to a sum of a length of the operating switch (38) in the first direction and a travel length of the operating switch (38) in the first direction.

8. The air fryer (1000, 100) according to claim 7, wherein,
a push button (382) is provided on an upper surface of the operating switch (38).

9. The air fryer (1000, 100) according to claim 8, wherein,
the push button (382) is a second protrusion formed on the upper surface of the operating switch (38) in a direction perpendicular to the first direction and away from a direction of the cooking chamber body (1), and there is a transitional arc between the second protrusion and the operating switch (38).

10. The air fryer (1000, 100) according to claim 7, wherein,
there is a guide member mutually cooperating between the operating switch (38) and the valve cover (36); the guide member comprises a guide groove and a guide protrusion that adapt with each other; one of the guide groove and the guide protrusion is provided on the valve cover (36), and the other one of the guide groove and the guide protrusion is provided on the operating switch (38).

11. The air fryer (1000, 100) according to claim 4, further comprising:
a control device (930) (11), connected to the detection member (42), wherein the control device (930) (11) is configured to control a humidity of the cooking chamber (12) of the air fryer (1000, 100) or a movement of the adjustment member (32) based on a detection result of the detection member (42).

12. The air fryer (1000, 100) according to claim 6, wherein,
a through hole (344) is provided at a position of the valve seat (34) corresponding to the detection member (42), and the through hole (344) is used by the detection member (42) to trigger the trigger part (324).

13. A cooking control method, using an air fryer (1000, 100) according to any one of claims 1 to 12, which is provided with a cooking chamber (12) and a water vapor channel (3230), wherein the water vapor channel (3230) communicates with the cooking chamber (12) and an outside; the air fryer (1000, 100) comprises a water vapor adjustment device (1005), the water vapor adjustment device (1005) is provided in the water vapor channel (3230) and adjusts a blocking degree for the water vapor channel (3230); the method comprises:
(S510, S810) in response to a cooking instruction, determining a cooking mode; wherein, in different cooking modes, the blocking degrees for the water vapor channel (3230) are different, and a finished product of a same target dish has different water contents after cooking in different cooking modes;
(S520, S620, S720) determining working parameters of the air fryer (1000, 100) based on the cooking modes, and
(S530, S630, S730, S830) controlling the air fryer (1000, 100) to work based on the working parameters.

## Patentansprüche

1. Heißluftfritteuse (1000, 100), umfassend:
ein Gehäuse (5);
eine Trennwand (6), die in dem Gehäuse (5) montiert ist und einen Raum in dem Gehäuse (5) in einen ersten Kammerkörper und einen zweiten Kammerkörper unterteilt, die unabhängig voneinander angeordnet sind, mit einem in der Trennwand (6) vorgesehenen Dampfeinlass;
einen Garkammerkörper (1), der sich innerhalb des zweiten Kammerkörpers befindet und mit dem Dampfeinlass in Verbindung steht;
eine Heißluftvorrichtung (2) zum Zuführen von Heißluft in den Garkammerkörper (1); und
ein Dampfventil (3), umfassend einen Dampfkanal (31) und ein Einstellelement (32), das sich bewegt, wobei der Dampfkanal (31) mit dem Dampfeinlass in Verbindung steht, der Dampfkanal (31) eine erste Öffnung umfasst und das Einstellelement (32) eine Größe eines Querschnitts des Dampfkanals (31) oder eine Öffnungsgröße der ersten Öffnung einstellt,
**dadurch gekennzeichnet, dass**
die Trennwand (6) eine reflektierende Abdeckung (62) umfasst, die sich an einer Seite der Heißluftvorrichtung (2), die von dem Garkammerkörper (1) abgewandt ist, befindet, mit dem an der reflektierenden Abdeckung (62) vorgesehenen Dampfeinlass;
wobei
das Dampfventil (3) an einer Öffnung angeordnet ist, die an einem oberen Bereich der reflektierenden Abdeckung (62) vorgesehen ist; und
der Dampfkanal (31) unabhängig vorgesehen ist und über den Dampfeinlass mit dem Garkammerkörper (1) in Verbindung steht; und
ein Dichtungselement (7) zwischen der reflektierende Abdeckung (62) der Trennwand (6) und dem Dampfventil (3) vorgesehen ist, wobei das Dichtungselement (7) eine dichte Verbindung zwischen der reflektierenden Abdeckung (62) und dem Dampfventil (3) ermöglicht.

2. Heißluftfritteuse (1000, 100) gemäß Anspruch 1, wobei
ein Ende des Einstellelements (32) mit einem Sperrelement (322) versehen ist; wenn sich das Sperrelement (322) entlang einer ersten Richtung bewegt, sich eine Öffnungsfläche der ersten Öffnung allmählich verringert; wenn sich das Sperrelement (322) entlang einer zweiten Richtung bewegt, sich die Öffnungsfläche der ersten Öffnung allmählich vergrößert; wobei die erste Richtung der zweiten Richtung entgegengesetzt ist.

3. Heißluftfritteuse (1000, 100) gemäß Anspruch 2, wobei
ein Bedienschalter (38) an dem Ende des Einstellelements (32) vorgesehen ist, das entlang der ersten Richtung von der ersten Öffnung abgewandt ist, und der Bedienschalter (38) so konfiguriert ist, dass er das Sperrelement (322) dazu antreibt, sich entlang der ersten Richtung oder der zweiten Richtung zu bewegen.

4. Heißluftfritteuse (1000, 100) gemäß Anspruch 3, wobei
das Dampfventil (3) ferner ein Erfassungselement (42) umfasst, ein Auslöseteil (324) an dem Einstellelement (32) vorgesehen ist und das Auslöseteil (324) das Erfassungselement (42) in einem Bewegungsvorgang auslöst, um eine Position des Sperrelements (322) anzuregen.

5. Heißluftfritteuse (1000, 100) gemäß Anspruch 4, wobei
das Auslöseteil (324) ein erster Vorsprung ist, der durch das Sperrelement (322) entlang einer Richtung senkrecht zu der ersten Richtung ausgebildet wird und eine von der ersten Öffnung wegführende Richtung aufweist, und ein oberes Ende des ersten Vorsprungs eine gekrümmte Fläche oder eine geneigte Fläche zum Auslösen des Erfassungselements (42) aufweist.

6. Heißluftfritteuse (1000, 100) gemäß Anspruch 4, wobei das Dampfventil (3) ferner Folgendes umfasst:
einen Ventilsitz (34); und
eine Ventilabdeckung (36), die auf dem Ventilsitz (34) montiert ist, wobei die Ventilabdeckung (36) mit einem Auslassanschluss (362) versehen ist, zumindest ein Bereich des Dampfkanals (31) von der Ventilabdeckung (36) und dem Ventilsitz (34) umschlossen ist und mit dem Auslassanschluss (362) in Verbindung steht.

7. Heißluftfritteuse (1000, 100) gemäß Anspruch 6, wobei
das Einstellelement (32) beweglich zwischen dem Ventilsitz (34) und der Ventilabdeckung (36) vorgesehen ist, ein Bedienfenster (364) in der Ventilabdeckung (36) vorgesehen ist und das Bedienfenster (364) eine Ausweichposition ist, die durch eine Vertiefung der Ventilabdeckung (36) in eine Richtung des Ventilsitzes (34) ausgebildet wird; der Bedienschalter (38) beweglich an der Ventilabdeckung (36) und/oder am Ventilsitz (34) montiert ist und sich innerhalb der Ausweichposition befindet, eine Länge der Ausweichposition in der ersten Richtung größer oder gleich einer Summe aus einer Länge des Bedienschalters (38) in der ersten Richtung und einer Verfahrlänge des Bedienschalters (38) in der ersten Richtung ist.

8. Heißluftfritteuse (1000, 100) gemäß Anspruch 7, wobei
ein Druckknopf (382) an einer Oberseite des Bedienschalters (38) vorgesehen ist.

9. Heißluftfritteuse (1000, 100) gemäß Anspruch 8, wobei
der Druckknopf (382) ein zweiter Vorsprung ist, der an der Oberseite des Bedienschalters (38) in einer Richtung senkrecht zu der ersten Richtung und weg von einer Richtung des Garkammerkörpers (1) ausgebildet ist, und ein Übergangsbogen zwischen dem zweiten Vorsprung und dem Bedienschalter (38) vorhanden ist.

10. Heißluftfritteuse (1000, 100) gemäß Anspruch 7, wobei
ein Führungselement vorhanden ist, das eng mit dem Bedienschalter (38) und der Ventilabdeckung (36) zusammenarbeitet; das Führungselement eine Führungsnut und einen Führungsvorsprung umfasst, die zueinander passen; eines der Führungsnut und des Führungsvorsprungs an der Ventilabdeckung (36) vorgesehen ist, und das andere der Führungsnut oder des Führungsvorsprungs am Bedienschalter (38) vorgesehen ist.

11. Heißluftfritteuse (1000, 100) gemäß Anspruch 4, ferner umfassend:
eine Steuervorrichtung (930) (11), die mit dem Erfassungselement (42) verbunden ist, wobei die Steuervorrichtung (930) (11) so konfiguriert ist, dass sie eine Luftfeuchtigkeit der Garkammer (12) der Heißluftfritteuse (1000, 100) oder eine Bewegung des Einstellelements (32) auf der Grundlage eines Erfassungsergebnisses des Erfassungselements (42) steuert.

12. Heißluftfritteuse (1000, 100) gemäß Anspruch 6, wobei
ein Durchgangsloch (344) an einer Position des Ventilsitzes (34), die dem Erfassungselement (42) entspricht, vorgesehen ist und das Durchgangsloch (344) vom Erfassungselement (42) zum Auslösen des Auslöseteils (324) verwendet wird.

13. Garsteuerverfahren unter Verwendung einer Heißluftfritteuse (1000, 100) gemäß einem der Ansprüche 1 bis 12, die mit einer Garkammer (12) und einem Wasserdampfkanal (3230) versehen ist, wobei der Wasserdampfkanal (3230) mit der Garkammer (12) und einer Außenseite in Verbindung steht; die Heißluftfritteuse (1000, 100) eine Wasserdampf-Einstellvorrichtung (1005) umfasst, wobei die Wasserdampf-Einstellvorrichtung (1005) in dem Wasserdampfkanal (3230) vorgesehen ist und einen Verschlussgrad für den Wasserdampfkanal (3230) einstellt; wobei das Verfahren Folgendes umfasst:
(S510, S810) als Reaktion auf eine Garanweisung, Bestimmen eines Garmodus; wobei in verschiedenen Garmodi die Verschlussgrade für den Wasserdampfkanal (3230) unterschiedlich sind und ein Fertigerzeugnis desselben Zielgerichts nach dem Garen in verschiedenen Garmodi unterschiedliche Wassergehalte aufweist;
(S520, S620, S720) Bestimmen von Betriebsparametern der Heißluftfritteuse (1000, 100) auf der Grundlage der Garmodi, und
(S530, S630, S730, S830) Steuern der Heißluftfritteuse (1000, 100), so dass sie auf der Grundlage der Betriebsparameter arbeitet.

## Revendications

1. Friteuse à air chaud (1000, 100), comprenant :
un boîtier (5) ;
une plaque de séparation (6), montée dans le boîtier (5) et divisant un espace dans le boîtier (5) en un premier corps de chambre et un second corps de chambre qui sont agencés indépendamment l'un de l'autre, une entrée de vapeur étant prévue dans la plaque de séparation (6) ;
un corps de chambre de cuisson (1), situé à l'intérieur du second corps de chambre et communiquant avec l'entrée de vapeur ;
un dispositif à air chaud (2) pour acheminer de l'air chaud vers le corps de chambre de cuisson (1) ; et
une soupape de vapeur (3), comprenant un canal de vapeur (31) et un élément de réglage (32) qui se déplace, dans laquelle le canal de vapeur (31) communique avec l'entrée de vapeur, le canal de vapeur (31) comprend une première ouverture, et l'élément de réglage (32) règle la dimension d'une section transversale du canal de vapeur (31) ou la dimension d'ouverture de la première ouverture,
**caractérisée en ce que**
la plaque de séparation (6) comprend un couvercle réfléchissant (62), qui est situé sur un côté du dispositif à air chaud (2) éloigné du corps de chambre de cuisson (1), l'entrée de vapeur étant prévue sur le couvercle réfléchissant (62) ;
dans laquelle
la soupape de vapeur (3) est agencée au niveau d'une ouverture prévue sur une portion supérieure du couvercle réfléchissant (62) ; et
le canal de vapeur (31) est prévu indépendamment et communique avec le corps de chambre de cuisson (1) par l'intermédiaire de l'entrée de vapeur ; et
un élément d'étanchéité (7) est prévu entre le couvercle réfléchissant (62) de la plaque de séparation (6) et la soupape de vapeur (3), l'élément d'étanchéité (7) permettant une connexion étanche entre le couvercle réfléchissant (62) et la soupape de vapeur (3).

2. Friteuse à air chaud (1000, 100) selon la revendication 1, dans laquelle
une extrémité de l'élément de réglage (32) est pourvue d'un élément d'obturation (322) ; lorsque l'élément d'obturation (322) se déplace suivant une première direction, une aire d'ouverture de la première ouverture diminue progressivement, lorsque l'élément d'obturation (322) se déplace suivant une seconde direction, l'aire d'ouverture de la première ouverture augmente progressivement ; la première direction étant opposée à la seconde direction.

3. Friteuse à air chaud (1000, 100) selon la revendication 2, dans laquelle
un commutateur d'actionnement (38) est prévu à l'extrémité de l'élément de réglage (32) éloignée de la première ouverture suivant la première direction, et le commutateur d'actionnement (38) est configuré pour entraîner l'élément d'obturation (322) à se déplacer suivant la première direction ou la seconde direction.

4. Friteuse à air chaud (1000, 100) selon la revendication 3, dans laquelle
la soupape de vapeur (3) comprend en outre un élément de détection (42) ; une partie de déclenchement (324) est prévue sur l'élément de réglage (32), et la partie de déclenchement (324) déclenche l'élément de détection (42) au cours d'un processus de déplacement afin d'indiquer une position de l'élément d'obturation (322).

5. Friteuse à air chaud (1000, 100) selon la revendication 4, dans laquelle
la partie de déclenchement (324) est une première saillie formée par l'élément d'obturation (322) dans une direction perpendiculaire à la première direction et orientée à l'opposé de la première ouverture, et une extrémité supérieure de la première saillie présente une surface incurvée ou une surface inclinée pour déclencher l'élément de détection (42).

6. Friteuse à air chaud (1000, 100) selon la revendication 4, dans laquelle la soupape de vapeur (3) comprend en outre :
un siège de soupape (34) ; et
un couvercle de soupape (36), monté sur le siège de soupape (34), le couvercle de soupape (36) étant pourvu d'un orifice d'évacuation (362), au moins une partie du canal de vapeur (31) étant délimitée par le couvercle de soupape (36) et le siège de soupape (34) et communiquant avec l'orifice d'évacuation (362).

7. Friteuse à air chaud (1000, 100) selon la revendication 6, dans laquelle
l'élément de réglage (32) est prévu de manière mobile entre le siège de soupape (34) et le couvercle de soupape (36), une fenêtre d'actionnement (364) est prévue dans le couvercle de soupape (36), et la fenêtre d'actionnement (364) est une position d'évitement formée par un renfoncement du couvercle de soupape (36) en direction du siège de soupape (34) ; le commutateur d'actionnement (38) est monté de manière mobile sur le couvercle de soupape (36) et/ou sur le siège de soupape (34), et est situé à l'intérieur de la position d'évitement, une longueur de la position d'évitement suivant la première direction étant supérieure ou égale à la somme d'une longueur du commutateur d'actionnement (38) suivant la première direction et d'une longueur de course du commutateur d'actionnement (38) suivant la première direction.

8. Friteuse à air chaud (1000, 100) selon la revendication 7, dans laquelle
un bouton-poussoir (382) est prévu sur une surface supérieure du commutateur d'actionnement (38).

9. Friteuse à air chaud (1000, 100) selon la revendication 8, dans laquelle
le bouton-poussoir (382) est une seconde saillie formée sur la surface supérieure du commutateur d'actionnement (38) dans une direction perpendiculaire à la première direction et s'éloignant du corps de chambre de cuisson (1), et il existe un arc de transition entre la seconde saillie et le commutateur d'actionnement (38).

10. Friteuse à air chaud (1000, 100) selon la revendication 7, dans laquelle
un élément de guidage à coopération mutuelle est prévu entre le commutateur d'actionnement (38) et le couvercle de soupape (36) ; l'élément de guidage comprend une rainure de guidage et une saillie de guidage qui s'adaptent l'une à l'autre ; l'une parmi la rainure de guidage et la saillie de guidage est prévue sur le couvercle de soupape (36), et l'autre parmi la rainure de guidage et la saillie de guidage est prévue sur le commutateur d'actionnement (38).

11. Friteuse à air chaud (1000, 100) selon la revendication 4, comprenant en outre :
un dispositif de commande (930) (11), relié à l'élément de détection (42), le dispositif de commande (930) (11) étant configuré pour commander l'humidité de la chambre de cuisson (12) de la friteuse à air chaud (1000, 100) ou un déplacement de l'élément de réglage (32) sur la base d'un résultat de détection de l'élément de détection (42).

12. Friteuse à air chaud (1000, 100) selon la revendication 6, dans laquelle
un trou traversant (344) est prévu à une position du siège de soupape (34) correspondant à l'élément de détection (42), et le trou traversant (344) est utilisé par l'élément de détection (42) pour déclencher la partie de déclenchement (324).

13. Procédé de commande de cuisson, utilisant une friteuse à air chaud (1000, 100) selon l'une quelconque des revendications 1 à 12, laquelle est pourvue d'une chambre de cuisson (12) et d'un canal de vapeur d'eau (3230), dans laquelle le canal de vapeur d'eau (3230) communique avec la chambre de cuisson (12) et avec l'extérieur ; la friteuse à air chaud (1000, 100) comprend un dispositif de réglage de vapeur d'eau (1005), le dispositif de réglage de vapeur d'eau (1005) est prévu dans le canal de vapeur d'eau (3230) et règle un degré d'obturation du canal de vapeur d'eau (3230) ; le procédé comprend :
(S510, S810) en réponse à une instruction de cuisson, la détermination d'un mode de cuisson ; étant entendu que, dans différents modes de cuisson, les degrés d'obturation du canal de vapeur d'eau (3230) sont différents et qu'un produit fini d'un même plat cible présente des teneurs en eau différentes après cuisson dans différents modes de cuisson ;
(S520, S620, S720) la détermination de paramètres de fonctionnement de la friteuse à air chaud (1000, 100) sur la base des modes de cuisson, et
(S530, S630, S730, S830) la commande de la friteuse à air chaud (1000, 100) afin qu'elle fonctionne sur la base des paramètres de fonctionnement.
